(19) Europäisches Patentamt
European Patent Office
Office européen des brevets

(11) **EP 2 407 773 A1**

(12) **EUROPEAN PATENT APPLICATION**
published in accordance with Art. 153(4) EPC

(43) Date of publication:
**18.01.2012 Bulletin 2012/03**

(21) Application number: **10750591.9**

(22) Date of filing: **11.03.2010**

(51) Int Cl.:
*G01N 27/22* (2006.01)          *F01N 3/00* (2006.01)
*F01N 3/18* (2006.01)          *G01N 15/08* (2006.01)

(86) International application number:
**PCT/JP2010/001724**

(87) International publication number:
**WO 2010/103834 (16.09.2010 Gazette 2010/37)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **11.03.2009   JP 2009057959**
**19.06.2009   JP 2009146721**
**06.07.2009   JP 2009160151**

(71) Applicant: **Honda Motor Co., Ltd.**
**Minato-ku**
**Tokyo 107-8556 (JP)**

(72) Inventors:
• **OKAYAMA, Tatsuya**
**Wako-shi**
**Saitama 351-0193 (JP)**
• **MIKI, Masanobu**
**Wako-shi**
**Saitama 351-0193 (JP)**
• **IWAMA, Keizo**
**Wako-shi**
**Saitama 351-0193 (JP)**
• **OZAWA, Hidetaka**
**Wako-shi**
**Saitama 351-0193 (JP)**
• **HATTORI, Makoto**
**Wako-shi**
**Saitama 351-0193 (JP)**
• **KURAHASHI, Ken**
**Wako-shi**
**Saitama 351-0193 (JP)**
• **SAIKI, Koichi**
**Wako-shi**
**Saitama 351-0193 (JP)**
• **TSUTSUMI, Kojiro**
**Wako-shi**
**Saitama 351-0193 (JP)**

(74) Representative: **Prechtel, Jörg**
**Weickmann & Weickmann**
**Patentanwälte**
**Postfach 86 08 20**
**81635 München (DE)**

(54) **FAILURE DETECTION DEVICE FOR EXHAUST GAS PURIFICATION FILTER**

(57)     Provided is a DPF failure detection device not only capable of a quick detection but also having less erroneous and a small power consumption. The DPF failure detection device, after starting applying a dust collecting voltage to a dust collecting electrode, applies a measuring voltage to a measuring electrode while the dust collection voltage is being applied, thereby measuring the capacitance of a sensor device. The DPF failure detection device also stops applying the dust collecting voltage to the dust collecting electrode in response to the fact that the measured value ($C_{COL}$) of this capacitance exceeds a completion criterion ($C_{COL\_TH}$). Further, the DPF failure detection device applies the measuring voltage to the measuring electrode, thereby measuring the capacitance of the sensor device and obtaining a measured value ($C_{PM}$), on the basis of which a DPF failure is determined.

FIG. 16

EP 2 407 773 A1

**Description**

TECHNICAL FIELD

The present invention relates to failure detection device for an exhaust gas purification filter. In particular, the present invention relates to failure detection device for an exhaust gas purification filter that uses an electrostatic dust collection type of particulate matter sensor.

BACKGROUND ART

Technology that provides an exhaust gas purifying filter that collects particulate matter contained in exhaust gas, in an exhaust gas path of an internal combustion engine, has been widely used to decrease the emission amount of particulate matter. In addition, in a vehicle provided with an exhaust gas purifying filter, a device for detecting the failure of the exhaust gas purifying filter is also provided. As this failure detection device for an exhaust gas purifying filter, the below-mentioned device has been suggested thus far.

For example, Patent Document 1 discloses failure detection device provided with a particulate matter detection device detecting particulate matter in exhaust gas, which is provided at the downstream side of the exhaust gas purifying filter, to detect the failure of the exhaust gas purifying filter based on outputs from this particulate matter detection device.

In addition, Patent Document 2 discloses a failure detection device provided with particulate matter detection devices upstream and downstream of the exhaust gas purifying filter, respectively. This failure detection device calculates the ratio of the amount of particulate matter flowing in the exhaust gas purifying filter to the amount of particulate matter flowing out from the exhaust gas purifying filter based on the output from each of the sensors, and then compares the calculated ratio with that when the filter is in a normal state, thereby detecting the failure of the exhaust gas purifying filter.

In addition, as a particulate matter detection device used in such a failure detection device, devices such as that illustrated below have conventionally been proposed.

For example, Patent Document 3 illustrates a particulate matter detection device that includes a detection electrode configured from a porous conductive material. This particulate matter detection device measures a change in an electrical resistance value of detector electrodes due to particulate matter spontaneously adhering using a pair of conductive electrodes, and detects the amount of particulate matter contained in exhaust gas from this measured value.

Patent Document 4 proposes a particulate matter detection device of electrostatic particulate collection type. With this particulate matter detection device of electrostatic particulate collection type, an electrode portion configured by a pair of electrode plates is provided in an exhaust pipe, and particulate matter is made to adhere by applying a predetermined voltage to this electrode portion. Next, the concentration of particulate matter in the exhaust gas inside the exhaust pipe is detected by measuring an electrical characteristic such as capacitance of the electrode portion to which particulate matter has adhered.

Patent Document 1: Japanese Unexamined Patent Application, Publication No. 2007-315275
Patent Document 2: Japanese Unexamined Patent Application, Publication No. 2007-132290
Patent Document 3: Japanese Unexamined Patent Application, Publication No. 2006-266961
Patent Document 4: Japanese Unexamined Patent Application, Publication No. 2008-139294

Problems to be Solved by the Invention

As mentioned above, the particulate matter detection device of Patent Document 3 detects an amount of particulate matter in exhaust gas based on a change in an electrical characteristic of detection electrodes due to particulate matter spontaneously adhering to the detection electrodes. However, there is not a large change in the electrical characteristic of the detection electrodes in a state in which particulate matter sparsely adheres to the surface of the detection electrodes, and it is difficult to detect particulate matter in exhaust gas. As a result, a long will be required from the start of particulate matter adhering to the detection electrodes until a change becomes apparent in the electrical characteristic of the detection electrodes. More specifically, with a vehicle in a steady operating state, it may take on the order of 1 or 2 hours until a change in the electrical characteristic to become apparent. Therefore, in a case of using such a particulate matter detection device in a failure detection device for an exhaust gas purification filter, a long time will be required until actually detecting failure of the exhaust gas purification filter.

In addition, the particulate matter detection device of Patent Document 4 differs from the aforementioned particulate matter detection device of Patent Document 3 in that particulate matter is made to actively adhere to an electrode portion by applying a voltage to the electrode portion. As a result, with this particulate matter detection device it is possible to detect particulate matter in exhaust gas is a short time compared to the particulate matter detection device of Patent Document 3.

However, with such a particulate collection detection device, there is a limit to the deposition amount of particulate matter. In other words, when the deposition amount exceeds the above-mentioned limit, a change in the electrical characteristic of the electrode portion will not longer be apparent irrespective of a change in deposition amount, a result of which it may no longer be able to detect particulate matter in the exhaust gas.

As a result, with the particulate matter detection device of Patent Document 4, which actively performs collection of particulate matter, it is difficult to detect over a long period of time. However, in actual measurement, for example, there exist factors causing the electrical characteristic of the electrode portion to change greatly in a short period of time, such as clumps of particulate matter having peeled off and fallen from the filter then adhering to the electrode portion. As a result, in a case of using the particulate matter detection device of Patent Document 4, which has difficult in detection over a long period of time, in a failure detection device, the aforementioned such irregularly fluctuation factors cannot be eliminated, and may lead to false detection.

In addition, when the limit to the deposition amount is reached, it is necessary to regenerate the electrode portion, i.e. to remove the particulate matter adhered to the electrode portion by combusting or the like. However, with the particulate matter detection device of Patent Document 4 which causes particulate matter to active adhere as described above, the number of times performing generating of the electrode portion becomes great, and thus the amount of electric power consumption may become large.

The present invention has an object of providing a failure detection device for an exhaust gas purification filter that has low false detection and a low amount of electric power consumption, while being able to detection failure in a short period of time.

Means for Solving the Problems

In order to achieve the above object, the present invention provides an failure detection device for an exhaust gas purification filter including a sensor element (12) that is provided in an exhaust channel (4) of an internal combustion engine (1) downstream of the exhaust gas purification filter (3) that collects particulate matter contained in exhaust gas, and to which particulate matter contained in exhaust gas adheres. The sensor element has a first electrode portion (123A, 128A) to which particulate a collection voltage for causing particulate matter contained in exhaust gas to adhere to the sensor element is applied, and a second electrode portion (127A, 127B) to which a measurement voltage for measuring an electrical characteristic of the sensor element is applied. The failure detection device includes: a voltage application initiation means (5, 17) for initiating application of the particulate collection voltage to the first electrode; a first measurement means (5, 17) for measuring an electrical characteristic of the sensor element by applying the measurement voltage to the second electrode, after the application of the particulate collection voltage has been initiated; a voltage application stop means (5, 17) for stopping application of the particulate collection voltage to the first electrode in response to a predetermined condition being satisfied; a second measurement means (5, 17) for measuring an electrical characteristic of the sensor element by applying the measurement voltage to the second electrode after application of the particulate collection voltage has stopped; and a failure judgment means (5, 17) for judging failure of the exhaust gas purification filter based on a measured value ($C_{PM}$) of the second measurement means.

According to the present invention, after the particulate collection voltage has been applied to the first electrode portion, the application of the particulate collection voltage is stopped in response to a predetermined condition being satisfied, and the electrical characteristic of the sensor element is measured by the measurement voltage applied to the second electrode portion. Furthermore, failure of the exhaust gas purification filter is judged based on the measured value of the electrical characteristic.

Herein, there is a trait in the electrical characteristic of the sensor element whereby there is no change in the electrical characteristic of the sensor element until particulate matter of an adequate amount adheres to the sensor element, while there is no change even if the deposition amount of particulate matter adhered becomes excessive.

In contrast, with the present invention, particulate matter of an adequate amount can be made to adhere to the sensor element in a short time by applying the particulate collection voltage to the first electrode portion, whereby a state in which a change in the electrical characteristic of the sensor element becomes apparent can be established at an early stage. As a result, the state in which a change in the electrical characteristic becomes apparent in a short time on the order of 30 seconds, for example, is established, and thus judgment of failure of the exhaust gas purification filter can be initiated. In other words, since the responsiveness is high, it is possible to judge exhaust gas purification filter failure at any timing during vehicle operation.

In addition, when measuring the electrical characteristic of the sensor element and judging exhaust gas purification filter failure, the application of the particulate collection voltage to the first electrode portion is not carried out; therefore, particulate matter slowly and spontaneously adheres to the sensor element, and the electrical characteristic of the sensor element changes gradually, whereby exhaust gas purification filter failure can be judged over a long time. Therefore, flase detection of exhaust gas purification filter failure can be reduced, by removing the aforementioned such main causes for irregular fluctuation.

In addition, in the present invention, the two electrode portions of the first electrode portion and the second electrode portion are provided; therefore, while performing collection of particulate matter by applying the particulate collection voltage to the first electrode portion, it is possible to measure the electrical characteristic of the sensor element by applying the measurement voltage to the second electrode portion. As a result, the aforementioned effects can be expected also from being able to accurately determine the stop time of particulate collection in real-time.

In addition, since it is possible to determine exhaust gas purification filter failure over a long period of time, the number of times repeating the processes of particulate collection, measurement and regeneration can be reduced, whereby it is possible to decrease the consumption of electrical power accompanying particulate collection and the application of voltage to the heater.

In this case, it is preferable for the failure judgment means to judge that the exhaust gas purification filter is normal in a case of the predetermined condition not being satisfied from after initiating application of the particulate collection voltage to the first electrode until a predetermined time elapses ($T_{COL\_MAX}$).

According to the present embodiment, in the duration from initiating the application of particulate collection voltage to the first electrode portion until the predetermined time elapses, the exhaust gas purification filter is judged to be normal in a case of the above-mentioned predetermined condition not being satisfied, i.e. in a case of a measured value of the first measurement means or a parameter calculated based on this measured value not having exceeded a predetermined threshold value. In a case of the exhaust gas particulate filter being normal, particulate matter emitted from the internal combustion engine is mostly collected in this exhaust gas particulate filter. As a result, the amount of particulate flowing into the sensor element provided downstream of the exhaust gas particulate filter is extremely small, and it is difficult for a change in the electrical characteristic of the sensor element to become apparent. According to the present invention, by judging exhaust gas purification filter failure by employing such a characteristic of the sensor element, it is possible to improve the detection accuracy of exhaust gas purification filter failure.

In this case, it is preferable for the particulate collection voltage to be higher than the measurement voltage.

According to the present invention, a particulate collection voltage that is higher than the measurement voltage is applied to the first electrode portion. It is thereby possible to cause particulate matter to actively adhere to the sensor element when applying the particulate collection voltage. On the other hand, it is possible to prevent particulate matter from unnecessarily adhering to the sensor element when applying the measurement voltage.

In order to achieve the above object, the present invention provides a failure detection device for an exhaust gas purification filter including a sensor element (129 that is provided in an exhaust channel (4) of an internal combustion engine (1) downstream of the exhaust gas purification filter (3) that collects particulate matter contained in exhaust gas, and to which particulate matter contained in exhaust gas adheres. The sensor element has an electrode portion (323A, 327A) to which either of a particulate collection voltage for causing particulate matter contained in exhaust gas to adhere to the sensor element, and a measurement voltage that is lower than the particulate collection voltage and is for measuring an electrical characteristic of the sensor element is selectively applied. The failure detection device includes: a voltage application means (5, 17) for applying the particulate collection voltage to the electrode over a predetermined time; a first measurement means (5, 17) for measuring the electrical characteristic of the sensor element by applying the measurement voltage to the electrode portion after the particulate collection voltage is applied; a judgment means (5, 17) for judging whether a predetermined condition has been satisfied; a second measurement means (5, 17) for measuring the electrical characteristic of the sensor element by applying the measurement voltage to the electrode portion, after it has been judged that the predetermined condition is satisfied; and a failure judgment means (5, 17) for judging failure of the exhaust gas purification filter based on a measured value ($C_{PM}$) of the second measurement means.

According to the present invention, after the particulate collection voltage has been applied to the electrode portion, the electrical characteristic of the sensor element is measured by the measurement voltage applied to the second electrode portion in response to a predetermined condition being satisfied. Furthermore, failure of the exhaust gas purification filter is judged based on the measured value of the electrical characteristic.

Particulate matter of an adequate amount can thereby be made to adhere to the sensor element in a short time, whereby a state in which a change in the electrical characteristic of the sensor element becomes apparent can be established at an early stage. As a result, the state in which a change in the electrical characteristic becomes apparent in a short time on the order of 30 seconds, for example, is established, and thus judgment of failure of the exhaust gas purification filter can be initiated. In other words, since the responsiveness is high, it is possible to judge exhaust gas purification filter failure at any timing during vehicle operation.

In addition, when measuring the electrical characteristic of the sensor element and judging exhaust gas purification filter failure, the application of the particulate collection voltage to the electrode portion is not carried out; therefore, particulate matter slowly and spontaneously adheres to the sensor element, and the electrical characteristic of the sensor element changes gradually, whereby exhaust gas purification filter failure can be judged over a long time. Therefore, false detection of exhaust gas purification filter failure can be reduced, excluding the aforementioned such main causes for irregular fluctuation.

In addition, since it is possible to judge exhaust gas particulate filter failure over a long period of time, the number of times repeating the processes of particulate collection, measurement and regeneration can be reduced, whereby it is possible to decrease the consumption of electrical power accompanying particulate collection and the application of voltage to the heater.

In this case, it is preferable for the application of the particulate collection voltage by the voltage application means and measurement by the first measurement means to be performed again in a case of the judgment means having judged that the predetermined condition has not been satisfied.

According to the present invention, in a case of determining that the above-mentioned predetermined condition has not been satisfied, the application of the particulate collection voltage and measurement of the electrical characteristic of the sensor element are performed again. Herein, for example, it is set so that the measured value of the first measurement means or a parameter calculated based on this measure value exceeding a predetermined threshold value is defined as the predetermined condition. In a case of such a condition being imposed, according to the present invention, it is possible to establish a state in which change in the capacitance of the sensor element 12 becomes apparent at an early stage more reliably. Therefore, the time required to detect failure of the exhaust gas purification filter can be shortened.

In this case, it is preferable for the exhaust gas purification filter to be judged to be normal in a case of the predetermined condition not being satisfied from after initiating application of the particulate collection voltage to the electrode portion until a predetermined time ($T_{COL\_MAX}$) elapses.

According to the present embodiment, in the duration from initiating the application of particulate collection voltage to the electrode portion until the predetermined time elapses, the exhaust gas purification filter is judged to be normal in a case of the above-mentioned predetermined condition not being satisfied, i.e. in a case of a measured value of the first measurement means or a parameter calculated based on this measured value not having exceeded a predetermined threshold value. In a case of the exhaust gas particulate filter being normal, particulate matter emitted from the internal combustion engine is mostly collected in this exhaust gas particulate filter. As a result, the amount of particulate flowing into the sensor element provided downstream of the exhaust gas particulate filter is extremely small, and it is difficult for a change in the electrical characteristic of the sensor element to become apparent. According to the present invention, by judging exhaust gas purification filter failure by employing such a characteristic of the sensor element, it is possible to improve the detection accuracy of exhaust gas purification filter failure.

In this case, it is preferable for the failure detection device to further include a transient operating state judgment means for judging whether an operating state of the internal combustion engine is a transient operating state, in which the particulate collection voltage is not applied in a case of the operating state not being a transient operating state.

According to the present invention, in a case of the operating state of the internal combustion engine not being a transient operating state, i.e. in a case of the operating state of the internal combustion engine being a steady operating state, the particulate collection voltage is not applied. In the case of the internal combustion engine being in a steady operating state, the emitted amount of particulate matter is extremely small. As a result, in a case of being in a steady operating state, it is difficult to cause an amount of particulate matter to adhere to the sensor element to an extent for which a change in the electrical characteristic of the sensor element becomes apparent in a short time, even if applying the particulate collection voltage. Therefore, by configuring so that the particulate collection voltage is not applied in such a transient operating state, it is possible to suppress the wasteful consumption of electric power used in the application of the particulate collection voltage.

In this case, it is preferable for the failure detection device to further include an emission amount judgment means (5, 17) for judging whether an emitted amount of particulate matter within a predetermined spontaneous adherence period is less than a predetermined amount, based on the operating state of the internal combustion engine, in which judgment of failure of the exhaust gas purification filter is not performed by the failure judgment means in a case of the emitted amount of particulate matter within the spontaneous adherence period being judged to be less than the predetermined amount.

According to the present invention, in a case of the emitted amount of particulate matter within a predetermined spontaneous adherence period being less than a predetermined amount, judgment of exhaust gas purification filter failure is not performed. In a case of the emitted amount of particulate matter in a spontaneous adherence period in which particulate matter is allowed to spontaneously adhere to the sensor element being small, it is considered that the change in the electrical characteristic of the sensor element will be small; therefore, failure cannot be detected with high accuracy. According to the present invention, the detection accuracy for exhaust gas particulate filter failure can be prevented from declining by configuring so that judgment of failure is not performed in such a spontaneous adherence period.

In this case, it is preferable for the failure judgment means to judge failure of the exhaust gas purification filter based on an amount of change ($\Delta C$) in a measured value of the second measurement means over a predetermined spontaneous adherence period.

According to the present invention, exhaust gas purification filter failure is judged based on the amount of change in a measured value of the electrical characteristic of the sensor element over the spontaneous adherence period. In a case of the exhaust gas purification filter failing, some of the particulate matter emitted from the internal combustion engine will pass through the exhaust gas particulate filter and reach the sensor element. As a result, it is considered that a large influence on the amount of change in the measured value over the aforementioned spontaneous adherence period will become apparent. According to the present invention, it is possible to further improve the detection accuracy for exhaust gas purification filter failure by judging failure based on the above-mentioned amount of change for which a large influence from the state of such a exhaust gas purification filter is apparent.

In this case, with a time calculated by subtracting a time ($T_{IDLE}$) for which the internal combustion engine is operated in an operating state with an emitted amount of particulate matter less than a predetermined amount from the spontaneous adherence period ($T_{AFTER}$) defined as an effective emission time, it is preferable for the failure judgment means to judge that the exhaust gas purification filter is normal in a case of a rate of change (C') in the measured value of the second measurement means over the effective emission time being less than a predetermined judgment value ($C'_{TH}$).

According to the present invention, a time arrived at by subtracting from the spontaneous adherence period the idle operating time for which the engine is operated in an idle operating state with an emitted amount of particulate matter less than a predetermined amount is set as an effective emission time, and in a case of the rate of change in the electrical characteristic of the sensor element over this effective emission time being less than a predetermined judgment value, the exhaust gas purification filter is judged to be normal. The detection accuracy of exhaust gas purification filter failure can be further improved by judging exhaust gas purification filter failure based on the rate of change in the electrical characteristic over the effective emission time excluding the time for which the internal combustion engine was operated in an operating state in which the emitted amount of particulate matter is small such as an idle operating state.

In this case, it is preferable for the predetermined condition to include the measured value ($C_{COL}$) of the first measurement means or a parameter calculated based on the measured value exceeding a predetermined threshold value ($C_{COL\_TH}$).

According to the present invention, the application of the particulate collection voltage to the first electrode portion is stopped in response to the measured value of the first measurement means or a parameter calculated based on this measure value having exceeded the predetermined completion threshold value. It is thereby possible to establish a state in which change in the electrical characteristic of the sensor element becomes apparent at an early stage more reliably. Therefore, it is possible to shorten the time required in detecting exhaust gas particulate filter failure. In addition, by stopping the application of particulate collection voltage after a change in the electrical characteristic becomes apparent, the consumption of excess electrical power can be reduced.

In this case, it is preferable for the failure detection device to further include: an upstream-concentration detection means for detecting or estimating a concentration of particulate matter in the exhaust channel on an upstream side of the exhaust gas purification filter; and a downstream-side concentration calculating means for calculating a concentration of particulate matter on a downstream side of the exhaust gas purification filter, based on the measured value of the second measurement means, in which the failure judgment means judges failure of the exhaust gas purification filter based on the concentration ($D_F$) of particulate matter on the upstream side of the exhaust gas particulate filter and the concentration ($D_R$) of particulate matter on the downstream side of the exhaust gas particulate filter.

According to the present invention, failure of the exhaust gas purification filter is judged based on the concentration of particulate matter on an upstream side of the exhaust gas particulate filter, in addition to the concentration of particulate matter on the downstream side of the exhaust gas particulate filter. It is thereby possible to further improve the judgment accuracy for exhaust gas particulate filter failure. For example, in a low-load operating state or an idle operating state, the amount of particulate matter emitted from the internal combustion engine is small, and almost all thereof will be collected in the exhaust gas particulate filter; therefore, the amount of particulate matter emitted to the downstream side of the exhaust gas particulate filter will be extremely small. As a result, in a case of judging exhaust gas particulate filter failure based only on the concentration of particulate matter on the downstream side, for example, since the concentration of particulate matter cannot be detected with high accuracy in a low-load operating state or idle operating state, it will not be possible to accurately judge exhaust gas purification filter failure. In contrast, with the present invention, exhaust gas purification filter failure can be accurately judged also in such a low-load operating state and idle operating state by judging exhaust gas purification filter failure based on the concentration of particulate matter on an upstream side, which can be detected with higher accuracy than the downstream side, in addition to on the concentration of particulate matter on the downstream side.

In this case, it is preferable for the failure detection device to further include a collection rate calculating means for calculating a proportion of particulate matter that is collected in the exhaust gas purification filter, based on the concentration of particulate matter on the upstream side of the exhaust gas particulate filter and the concentration of particulate matter on the downstream side of the exhaust gas particulate filter, in which the failure judgment means judges that the exhaust gas purification filter is normal in a case of the proportion (X) of particulate matter that is collected in the exhaust gas particulate filter being larger than a predetermined value ($X_{TH}$).

According to the present invention, the proportion of particulate matter collected in the exhaust gas purification filter, i.e. collection rate of the exhaust gas purification filter, is calculated based on the concentration of particulate matter on the upstream side of the exhaust gas purification filter and the concentration of particulate matter on the downstream side of the exhaust gas purification filter, and failure of the exhaust gas purification filter is judged based on this collection rate. It is thereby possible to further improve the judgment accuracy for failure.

In this case, it is preferable for the failure detection device to further include a regeneration means for combustively removing particulate matter collected in the exhaust gas purification filter, in which judgment of failure by the failure judgment means is inhibited after combustive removal of particulate matter by the regeneration means ends until a predetermined inhibited period has elapsed.

With the exhaust gas purification filter in which many pores are formed so as to be able to collect only particulate matter in the exhaust, the collection performance temporarily declines irrespective of the state of the exhaust gas purification filter in the duration after the particulate matter collected is combustively removed until particulate matter fills these pores. Therefore, according to the present invention, judgment of exhaust gas purification filter failure is inhibited after the particulate matter collected in the exhaust gas purification filter until a predetermined inhibited period elapses. It is thereby possible to prevent mistakenly judging that the exhaust gas purification filter has failed due to particulate matter emitted to downstream of the exhaust gas particulate filter after the above-mentioned combustive removal until the particulate matter fills the pores. Specifically, it is thereby possible to further improve the judgment accuracy for failure.

In this case, it is preferable for the failure detection device to further include an accumulated amount calculating means for calculating an accumulated amount (CNT_PM) of particulate matter flowed into the exhaust gas purification filter, in which the inhibited period is a period from after combustive removal of particulate matter by the regeneration means ends until the accumulated amount exceeds a predetermined amount (W_END_REGEN).

It is considered that, in a case of the accumulated amount of particulate matter newly flowing into the exhaust gas particulate filter having exceeded a predetermined amount since combustively removing particulate matter by way of the regeneration means, many pores of the exhaust gas particulate filter are filled by particulate matter. Therefore, according to the present invention, misjudgment is prevented by defining a period from after the above-mentioned combustive removal ends until the accumulated amount of particulate matter flowed into the exhaust gas purification filter exceeds a predetermined value as an inhibited period, whereby the judgment accuracy for failure can be further improved.

In this case, it is preferable for the failure detection device to further include a collected amount estimating means for estimating an amount of particulate matter collected in the exhaust gas purification filter, in which the inhibited period is a period from after combustive removal of particulate matter by the regeneration means ends until the amount of particulate matter collected in the exhaust gas purification filter exceeds a predetermined amount.

It is considered that, in a case of the amount of particulate matter collected in the exhaust gas particulate filter having exceeded a predetermined amount since combustively removing particulate matter by way of the regeneration means, many pores of the exhaust gas particulate filter are filled by particulate matter. Therefore, according to the present invention, misjudgment is prevented by defining a period from after the above-mentioned combustive removal ends until the amount of particulate matter collected in the exhaust gas purification filter exceeds a predetermined value as an inhibited period, whereby the judgment accuracy for failure can be further improved.

In this case, it is preferable for the failure detection device to further include a collection rate estimating means for estimating a collection rate indicating a proportion of particulate matter that is collected among particulate matter flowing into the exhaust gas purification filter, in which the inhibited period is a period from after combustive removal of particulate matter by the regeneration means ends until the collection rate exceeds a predetermined value.

According to the present invention, misjudgment is prevented by defining a period from after combustive removal of particulate matter by way of the regeneration means until the collection rate of the exhaust gas purification filter exceeds a predetermined value as an inhibited period, whereby the judgment accuracy for failure can be further improved.

In this case, it is preferable for the failure detection device to further include a timing means for measuring an elapsed time since combustive removal of particulate matter by the regeneration means ended, in which the inhibited period is a period from after measurement of the elapsed time by the timing means is initiated until the elapsed time exceeds a predetermined time.

It is considered that, in a case of a predetermined time having elapsed since combustively removing particulate matter by way of the regeneration means, many pores of the exhaust gas particulate filter are filled by particulate matter. Therefore, according to the present invention, misjudgment is prevented by defining a period after the above-mentioned combustive removal ends until the elapsed time exceeds a predetermined time as an inhibited period, whereby the judgment accuracy for failure can be further improved.

In this case, it is preferable for the failure detection device to further include: a regeneration means for combustively removing particulate matter collected in the exhaust gas purification filter; and a filter temperature detection means for estimating or detecting a temperature of the exhaust gas purification filter, in which judgment of failure by the failure judgment means is inhibited after combustive removal of particulate matter by the regeneration means ends, in a case of the temperature (TEMP_DPF) of the exhaust gas purification filter being at least the combustion temperature (T_PM) of particulate matter.

Even if the exhaust gas particulate filter is in a failed state, since particulate matter newly flowing thereinto also combusts in the exhaust gas purification filter from the waste heat after the combustive remove of particulate matter by the regeneration means ends, the amount of particulate matter emitted to downstream of the exhaust gas purification filter is small. Therefore, according to the present invention, judgment for failure is inhibited after the above-mentioned combustive removal ends in a case of the temperature of the exhaust gas purification filter being at least the combustion temperature of particulate matter. Misjudgment is thereby prevented, whereby the judgment accuracy for failure can be further improved.

In this case, it is preferable for the failure detection device to further include a removal means for removing particulate matter adhered to the sensor element, in which the removal means removes particulate matter adhered to the sensor element, based on a measured value ($C_{REG}$) of the electrical characteristic of the sensor element having become larger than a predetermined threshold value ($C_{PEG-TH}$), and the predetermined threshold value for the measured value is set within a region in which a rate of change in the electrical characteristic of the sensor element relative to an adhered amount of particulate matter of the sensor element is less than a predetermined value.

According to the present invention, particulate matter adhered to the sensor element is removed based on the measured value of the electrical characteristic of the sensor element having become larger than the threshold value. In addition, this threshold value for the measured value is set within a region in which the rate of change in the electrical characteristic of the sensor element relative to the adhered amount of particulate matter of the sensor element is less than a predetermined value, i.e. in a region in which the sensitivity of the sensor element is low. Since it is thereby possible to normally use the sensor element in a region of good sensitivity, the failure judgment accuracy can be further improved.

BRIEF DESCRIPTION OF THE DRAWINGS

FIG. 1 is an illustration showing configurations of an internal combustion engine and a control device thereof, including a failure detection device for a DPF related to a first embodiment of the present invention;

FIG. 2 is an illustration showing a block diagram of a PM sensor according to the embodiment;

FIG. 3 is a perspective view of a sensor element according to the embodiment;

FIG. 4 is an exploded perspective view of the sensor element according to the embodiment;

FIG. 5 is an illustration schematically showing an appearance when PM adheres and deposits on the entire surface inside the particulate collection portion of the sensor element according to the embodiment;

FIG. 6 is a graph showing the time course of the capacitance of the sensor element according to the embodiment;

FIG. 7 is a flowchart showing a sequence of DPF failure detection processing according to the embodiment;

FIG. 8 is a flowchart showing a sequence of DPF failure detection processing according to the embodiment;

FIG. 9 is a flowchart showing a sequence of DPF failure detection processing according to the embodiment;

FIG. 10 is a graph showing a relationship between a deposition amount of PM in a case of PM being allowed to spontaneously adhere to the particulate collection portion of the sensor element and the time course of the capacitance of the particulate collection portion according to the embodiment;

FIG. 11 is a graph illustrating a method of performing DPF failure judgment based on an amount of change in the capacitance;

FIG. 12 is a graph illustrating a method of performing DPF failure judgment based on the amount of change in the capacitance;

FIG. 13 provides graphs showing the time course of the capacitance of the particulate collection portion in a case of causing the engine to operate under two different operating conditions;

FIG. 14 is a graph showing the times courses of the capacitance under the two different operating conditions as superimposed;

FIG. 15 is a graph showing the time courses of the capacitance under the two difference operating conditions as superimposed;

FIG. 16 is a time chart showing a control example of DPF failure detection processing according to the embodiment;

FIG. 17 is a time chart showing a control example of DPF failure detection processing according to the embodiment;

FIG. 18 is an exploded perspective view of the sensor element of a PM sensor according to a second embodiment of the present invention;

FIG. 19 is a view schematically showing an appearance when PM has adhered to deposit over the entire surface inside the particulate collection portion of the sensor element according to the embodiment;

FIG. 20 is a flowchart showing a sequence of DPF failure detection processing according to the embodiment;

FIG. 21 is a flowchart showing a sequence of DPF failure detection processing according to the embodiment;

FIG. 22 is a flowchart showing a sequence of DPF failure detection processing according to the embodiment;

FIG. 23 is a graph showing the change in the measured value of capacitance in a case of allowing the PM sensor to operate in exhaust of a predetermined PM concentration;

FIG. 24 is a flowchart showing a sequence of DPF failure detection processing according to a third embodiment of the present invention;

FIG. 25 is an illustration showing configurations of an engine and a control device thereof, including a DPF failure detection device related to a fourth aspect of the present invention;

FIG. 26 is a flowchart showing a sequence of DPF failure detection processing according to the embodiment;

FIG. 27 is a flowchart showing a sequence of DPF failure detection processing according to the embodiment;

FIG. 28 is a flowchart showing a sequence of DPF failure detection processing according to the embodiment;

FIG. 29 is a flowchart showing a sequence of DPF failure detection processing according to a fifth aspect of the present invention;

FIG. 30 is a graph showing characteristic behavior of the PM concentration in the exhaust downstream of the DPF after executing DPF regeneration operation;

FIG. 31 is a flowchart showing a sequence of determining execution of DPF failure detection processing according to a sixth embodiment of the present invention;

FIG. 32 is a graph showing a relationship between an amount of PM deposited in the sensor element and the capacitance of this sensor element;

FIG. 33 is a flowchart showing a sequence of DPF failure detection processing according to a seventh aspect of the present invention;

FIG. 34 is a flowchart showing a sequence of DPF failure detection processing according to the embodiment;

FIG. 35 is a flowchart showing a sequence of DPF failure detection processing according to the embodiment; and

FIG. 36 is a flowchart showing a sequence of DPF failure detection processing according to the embodiment.

PREFERRED MODE FOR CARRYING OUT THE INVENTION

Hereinafter, embodiments of the present invention will be explained in detail while referring to the drawings. It should be noted that explanations for configurations shared with the first embodiment will be omitted from the explanations of the second embodiment and after.

First Embodiment

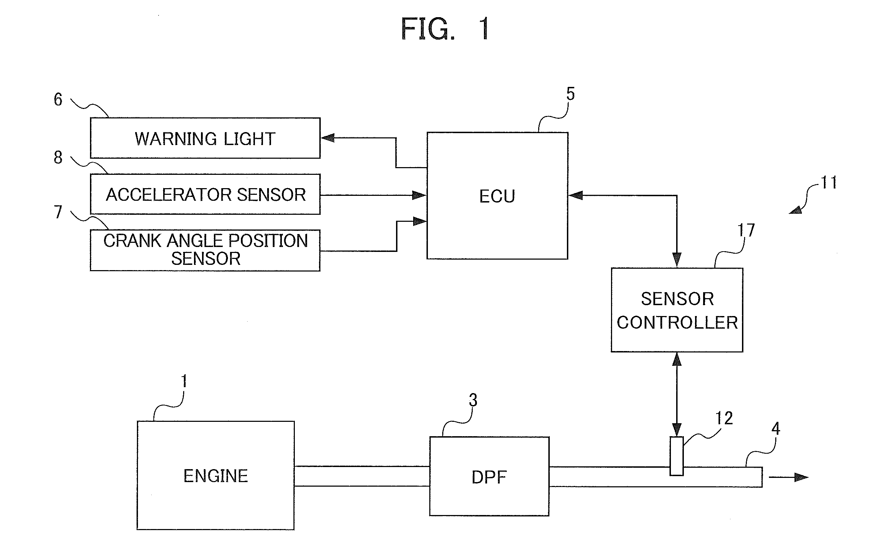

FIG. 1 is a view showing the configurations of an internal combustion engine and a control device thereof including a failure detection device for an exhaust gas purifying filter related to the present embodiment of the present invention. The internal combustion engine (hereinafter simply referred to as "engine") 1 is a diesel engine that directly injects fuel into each cylinder, and a fuel injector (not shown) is provided in each cylinder. These fuel injectors are electrically connected with an electronic control unit (hereinafter referred to as "ECU") 5 that controls a valve-opening time and a valve-closing time of the fuel injectors.

An exhaust pipe 4 in which exhaust gas from the engine 1 flows is provided with, in this order from the upstream side, a diesel particulate filter (hereinafter referred to as "DPF") 3 and a particulate matter detection device 11 (hereinafter referred to as "PM sensor") detecting particulate matter (hereinafter referred to as "PM"), the principal component of which is carbon contained in exhaust gas.

The DPF 3 is provided with filter walls of a porous media and, when exhaust gas passes through fine pores of this filter wall, PM contained in the exhaust gas is collected by being deposited on the surface of the filter wall and in the pores of the filter wall. For example, porous media made of aluminum titanate, cordierite, and the like are used as the constituent material of the filter wall.

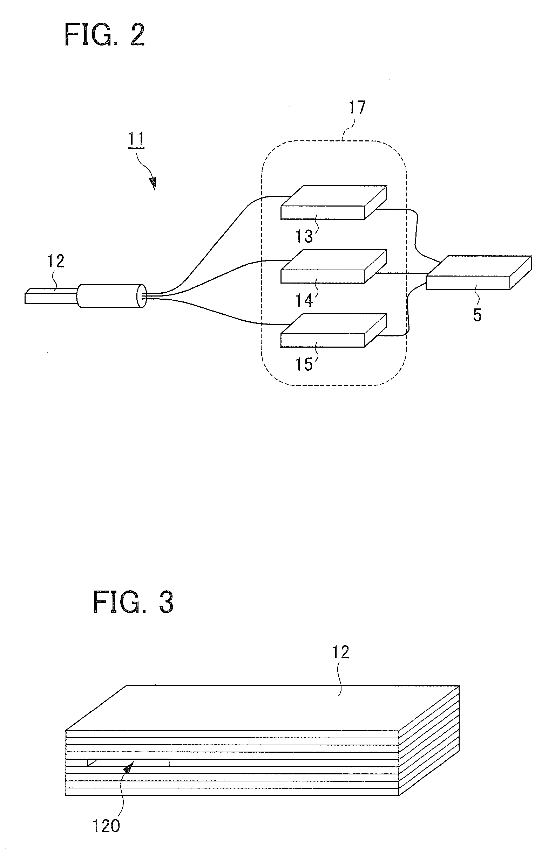

FIG. 2 is an illustration showing a block diagram of a PM sensor 11.

The PM sensor 11 includes a sensor element 12 that is provided inside the exhaust pipe 4 on a downstream side of the DPF 3, and a sensor controller 17 that is connected to the ECU 5 and controls this sensor element 22. As shown below, the PM sensor 11 measures an electrical characteristic of the sensor element 12 on which PM contained in the exhaust flowing inside the exhaust pipe 4 adheres, and detects PM in the exhaust flowing inside the exhaust pipe based on this measured value.

The sensor controller 17 is configured to include a DC power source 13 for particulate collection, an impedance measuring instrument 14, and a temperature control device 15 that controls the temperature of the sensor element 12.

FIG. 3 is a perspective view of the sensor element 12. As shown in FIG. 3, the sensor element 12 includes a vent through which exhaust containing PM passes, and a particulate collection portion 120 is formed by this vent. The PM contained in the exhaust adheres and deposits on an inner wall of this particulate collection portion 120.

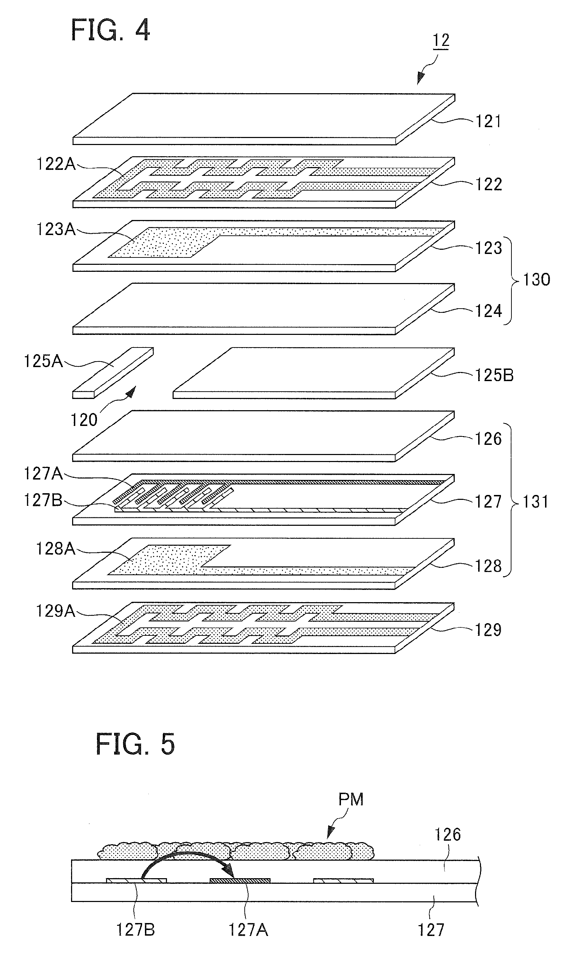

FIG. 4 is an exploded perspective view of the sensor element 12. As shown in FIG. 4, the sensor element 12 is configured by combining a pair of electrode plates 130 and 131 by way of setting spacers 125A and 125B of plate shape therebetween, and sandwiching with heater layers 122 and 129 and an alumina plate 121. As a result, the particulate collection portion 120 surrounded by the electrode plates 130 and 131 and spacers 125A and 125B is formed.

The electrode plate 130 is formed by laminating a dielectric layer 124 and a particulate collection electrode layer 123. In addition, the electrode plate 131 is formed by laminating a dielectric layer 126, a measurement electrode layer 127, and a particulate collection electrode layer 128.

The measurement electrode layer 127 is provided with a pair of comb-shaped measurement electrodes 127A and 127B. More specifically, the measurement electrodes 127A and 127B are configured to include a pair of comb-teeth portions formed at a position corresponding to the particulate collection portion 120 on an end side of the measurement electrode layer 127, and a pair of comb body portions that extend from these comb-teeth portions to another end side. More specifically, the measurement electrodes 127A and 127B are opposingly disposed so that the comb-teeth portions of one of the comb-shaped measurement electrodes 127A and the comb-teeth portions of the other comb-shaped measurement electrode 127B are fit between each other.

In addition, the pair of comb body portions is electrically connected to the impedance measuring instrument 14.

Here, the PM detection mechanism of the present embodiment provided with comb-shaped measurement electrodes 127A and 127B in the measurement electrode layer 127 will be explained.

FIG. 5 is a view schematically showing an appearance when PM adheres and deposits on the entire surface inside the particulate collection portion 120 of the sensor element 12 of the present embodiment. As shown in FIG. 5, PM collected in the particulate collection portion 120 deposits via the dielectric layer on the comb-teeth portions of comb-shaped measurement electrodes 127A and 127B. At this time, a leak electric field between the measurement electrode 127A and 127B, which are adjacent, is influenced by PM thus deposited, and the electrical characteristic between the measurement electrodes 127A and 127B changes. Since this change in electrical characteristic has a correlation with PM deposition amount, it is possible to detect PM contained in exhaust by measuring this change in electrical characteristic. It should be noted that, in the following explanation, the electrical characteristic of the sensor element 12 indicates an electrical characteristic of the particulate collection portion 120 correlated to the amount of PM deposited in the sensor element 12.

Particulate collection electrode layers 123 and 128 are provided with particulate collection electrodes 123A and 128A, which are made from a tungsten conductor layer. These particulate collection electrodes 123A and 128A are configured to include a conductor portion formed in a substantially square shape at a position corresponding to the particulate collection portion 120 on an end side of the particulate collection electrode layers 123 and 128, and a conductive wire portion that linearly extends from this conductor portion to the other end side of the alumina plate.

In addition, the conductive wire portion of the particulate collection electrodes 123A and 128A are electrically connected to a DC power source 13 for particulate collection.

It should be noted that the length of a side of the conductor portion of the particulate collection portions 123A and 128A is approximately 10 mm.

The heater layers 122 and 129 are provided with heater wires 122A and 129A, and these heater wires 122A and 129A are electrically connected to the temperature control device 15.

In addition, the alumina plate 121 is an alumina plate of substantially rectangular shape, and the thickness is approximately 1 mm.

The DC power source 13 for particulate collection is electrically connected to the conductive wire portion of the particulate collection electrodes 123A and 128A provided to the particulate collection electrode layers 123 and 128. The DC power source 13 for particulate collection operates based on a control signal sent from the ECU 5, and applies a predetermined particulate collection voltage that is greater than the measurement voltage, which is described later, over the particulate collection electrode layers 123 and 128. As a result, PM in the exhaust is made to adhere to the particulate collection portion 120.

The impedance measuring instrument 14 is electrically connected to the pair of comb body portions of the measurement electrode layer 127. The impedance measuring instrument 14 operates based on a control signal sent from the ECU 5, and detects the electrical characteristic of the sensor element 12 with a predetermined measurement voltage and measurement cycle, and outputs a detection signal substantially proportional to the capacitance thus detected to the ECU 5. It should be noted that, although the capacitance in particular is measured as the electrical characteristic of the sensor element 12 by the impedance measuring instrument 14 in the present embodiment, it is not limited thereto.

The temperature control device 15 is electrically connected to the heater wires 122A and 129A of the heater layers 122 and 129 provided by adjoining to the electrode plates 130 and 131, respectively, and is configured to contain a DC power source (not illustrated) for the heaters that supplies electric power to these heater layers 122 and 129.

The DC power source for the heaters operates based on a control signal sent from the ECU 5, and conducts a predetermined current to the heater layers 122 and 129. The heater layers 122 and 129 generate heat when current from the power source for the heaters is supplied, and heat the electrode plates 130 and 131, respectively. As a result, each of the electrode plates 130 and 131 are heated, and PM adhered to the particulate collection portion 120 can be combustively removed, whereby the sensor element 12 can be regenerated.

Referring back to FIG. 1, in addition to the sensor controller 17 of such a PM sensor 11 as above, a warning light 6, a crank angle position sensor 7, an accelerator sensor 8, and the like are connected to the ECU 5.

For example, the warning light 6 is provided in an instrument panel of a vehicle, and lights up based on a control signal transmitted from the ECU 5. The ECU 5 causes this warning light 6 to illuminate in a case of determining that the DPF 3 has failed, i.e. in a case of a failure judgment flag described later that indicates being in a state in which the DPF has failed being set to "1". Thus, the fact that the DPF 3 has failed can be informed to the driver.

The crank angle position sensor 7 detects the rotation angle of the crankshaft of the engine 1 and outputs a detection signal to the ECU 5. The accelerator sensor 8 detects the amount by which the accelerator pedal of a vehicle has been depressed, and outputs a detection signal to the ECU 5. Revolution speed N and fuel consumption amount W as the operating state parameters indicating the operating state of the engine 1 are calculated by the ECU 5 based on outputs from the crank angle position sensor 7 and the accelerator sensor 8.

The ECU 5 is provided with an input circuit having functions such as shaping signal waveforms that are input from various kinds of sensors, correcting voltage levels to a predetermined level, and converting analog signal values into digital signal values, and a central processing unit (hereinafter referred to as "CPU"). Furthermore, the ECU 5 is provided with a memory circuit that stores various kinds of calculation programs to be executed by the CPU, calculation results, and the like, and an output circuit that outputs control signals to the sensor controller 17, the warning light 6, the fuel injectors of the engine 1, etc.

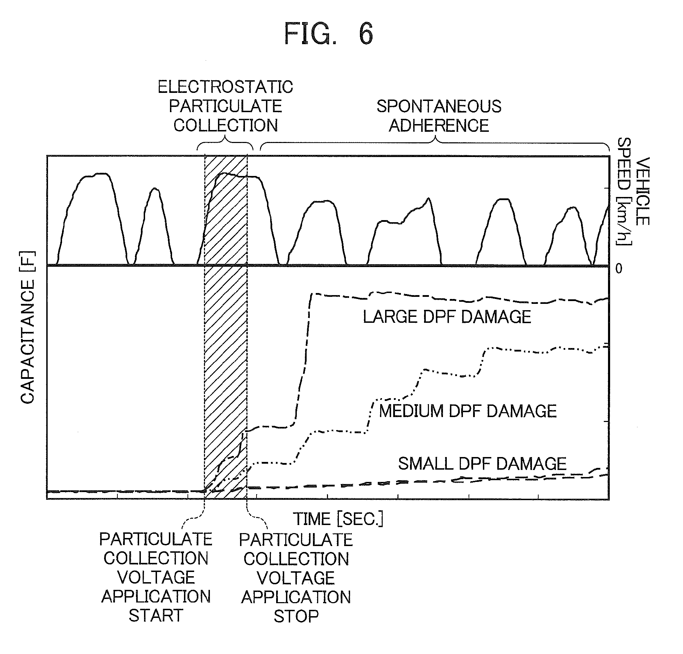

Next, DPF failure detection processing to judge the failure of the DPF will be explained while referring to FIGS. 6 to 15.

FIG. 6 is a graph showing the time course of the capacitance of the particulate collection portion in a case of having the engine operate under predetermined operating conditions. In FIG. 6, the top shows the time course of vehicle speed, and the bottom shows the time course of the capacitance of the sensor element. In addition, with the example shown in FIG. 6, the results are shown of preparing three types of DPF's respectively differing in the extent of damage, and measuring the capacitance of the sensor element for each of these DPF's under the same operating conditions.

As shown in FIG. 6, the capacitance of the sensor element gradually increases due to PM contained in the exhaust steadily depositing on the particulate collection portion. In addition, when the extent of damage to the DPF rises, the amount of PM passing through the DPF increases, and the amount of PM adhering to the particulate collection portion also increases; therefore, the amount of change in the capacitance will also rise. As described in detail later, in the DPF failure detection processing of the present embodiment, failure of the DPF is determined based on such an amount of change in the capacitance.

In addition, as shown in FIG. 6, in a period in which the operating state of the engine is a transient operating state, particularly in a period in which the vehicle speed accelerates from an idle operating state of "0" up to a predetermined speed, the capacitance of the sensor element also increases. In contrast, in a case of the operating state of the engine being a steady operating state, i.e. in a case of the engine being in an idle operating state, a case of being in a decelerating state, or a case of being in a traveling state at constant speed, the change in capacitance is small. This shows that the PM emission amount in particular is large in a case of the operating state of the engine being in a transient operating state.

As described later in detail, in the DPF failure detection processing of the present embodiment, PM is actively collected in the particulate collection portion until a change in the capacitance of the sensor element becomes apparent, by applying a particulate collection voltage to particulate collection electrodes, at a period in which the operating state of the engine is in such a transient operating state. In addition, after actively collecting in this way, the application of the particulate collection voltage is stopped, and PM is allowed to deposit spontaneously in the particulate collection portion. It should be noted that, in the following, actively collecting PM in the particulate collection portion by applying the particulate collection voltage is called electrostatic particulate collection, and allowing PM to adhere to the particulate collection portion without applying the particulate collection voltage is called spontaneous adherence.

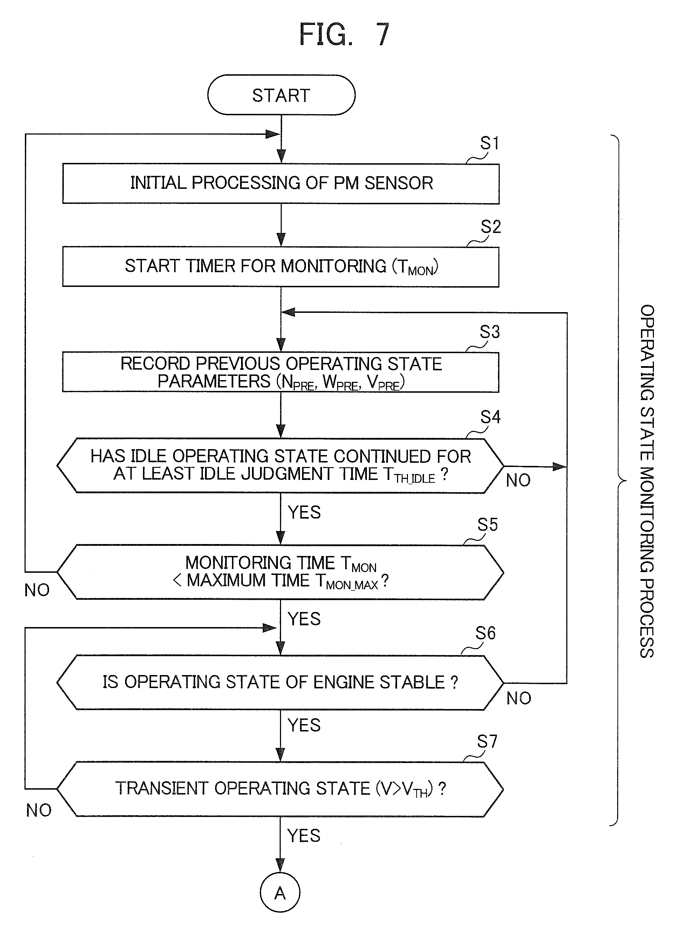

FIGS. 7 to 9 are flowcharts showing sequences of DPF failure detection processing. As described in detail later, this DPF failure detection processing is processing of determining that the DPF is in a normal state or is in a failed state based on the output of the PM sensor, and is executed by the ECU 5 after startup of the engine.

This DPF failure detection processing is divided into four processes mainly. More specifically, the DPF failure detection processing is configured to include: an operating state monitoring process (Steps S1 to S7) of monitoring the operating state of the engine; an electrostatic particulate collection process (Steps S11 to S16) of electrostatically collecting PM; a measurement process (Steps S21 to S25) of measuring the capacitance of the particulate collection portion of the sensor element after allowing PM to spontaneously adhere; and a failure judgment process (Steps S31 to S35) of judging failure of the DPF.

The operating state monitoring process (Steps S1 to S7) will be explained.

In this operating state monitoring process, the operating state of the engine is monitored to detect a period suited to initiating the application of particulate collection voltage. Herein, the period suited to initiating the application of the particulate collection voltage indicates a period in which PM can be efficiently collected by applying the particulate collection voltage, i.e. period in which the emitted amount of PM is relatively large. More specifically, the period suited to initiating the application of this particulate collection voltage indicates a period in which the operating state of the engine is in a transient operating state while accelerating from a stable state up to a predetermined vehicle speed.

In Step S1, initial processing of the PM sensor is executed. More specifically, in this initial processing, in addition to regenerating the sensor element, detection of the existence of burn-out and short-circuiting, calibration of the PM sensor, and the like are performed.

In Step S2, a timer for monitoring is started, and measurement of a monitoring time $T_{MON}$ indicating the time monitoring the operating state is initiated.

In Step S3, the three operating state parameters of the engine revolution speed N, the fuel injection amount W, and the vehicle speed V are measured, and these measured values are recorded as previous operating state parameters (revolution speed $N_{PRE}[T]$, fuel injection amount $W_{PRE}[T]$, and vehicle speed $V_{PRE}[T]$.

In Step S4, over a predetermined idle judgment time $T_{TH\_IDLE}$, it is determined whether or not the idle operating state continues, i.e. over the idle judgment time $T_{TH\_IDLE}$, it is determined whether the vehicle speed is "0". In a case of this determination being YES, Step S5 is advanced to, and in a case of being NO, Step S3 is advanced to.

In Step S5, it is determined whether the monitoring time $T_{MON}$ is less than a predetermined maximum time $T_{MON\_MAX}$. In a case of this determination being YES, Step S6 is advanced to. In a case of this determination being NO, it is determined that it is necessary to temporarily regenerate the sensor element in response to the monitoring time $T_{MON}$ exceeding the maximum time $T_{MON\_MAX}$, and Step S1 is advanced to.

In Step S6, it is determined whether the operating state of the engine is in a stable state based on the previous operating state parameters ($N_{PRE}$, $W_{PRE}$, $V_{PRE}$) More specifically, in a case of the time for which the vehicle speed $V_{PRE}$ is at least a predetermined speed is within a predetermined time, and the fuel injection amount $W_{PRE}$ is no more than a predetermined amount, it is determined that the operating state of the engine is in a stable state.

In Step S7, it is determined whether the operating state of the engine is a transient operating state by determining whether the vehicle speed V is greater than a predetermined judgment speed $V_{TH}$. In a case of this determination being YES, Step S11 is advanced to, and the electrostatic particulate collection process is initiated. In addition, in a case of this determination being NO, Step S7 is advanced to.

The electrostatic particulate collection process (Steps S11 to S16) will be explained.

In this electrostatic particulate collection process, electrostatic particulate collection is performed by applying the particulate collection voltage to the particulate collection electrodes until a predetermined condition is satisfied.

In Step S11, the application of the particulate collection voltage to the particulate collection electrodes is initiated. In other words, electrostatic particulate collection is initiated. Herein, the particulate collection voltage is set to 2 kV, for example.

In Step S12, a timer for electrostatic particulate collection is started, and measurement of an electrostatic particulate collection time $T_{COL}$ indicating the time performing electrostatic particulate collection is initiated.

In Step S13, the capacitance of the particulate collection portion is measured by leaving the particulate collection voltage applied and applying a measurement voltage to measurement electrodes, and this measured value is recorded as a capacitance during particulate collection $C_{COL}$. Herein, the measurement voltage is set to a value sufficiently smaller than the aforementioned particulate collection voltage, e.g., 1 V.

In Step S14, it is determined whether a predetermined condition set in order to determine the completion of electrostatic particulate collection has been satisfied. In the present embodiment, the capacitance during particulate collection $C_{COL}$ thus measured exceeding a predetermined completion judgment value $C_{COL\_TH}$ is defined as the condition determining the completion of electrostatic particulate collection. In a case of this determination being YES, i.e. in a case of the capacitance during particulate collection $C_{COL}$ being larger than the completion judgment value $C_{COL\_TH}$, Step S16 is advanced to. In a case of this determination being NO, i.e. in a case of the capacitance during particulate collection $C_{COL}$ being no more than the completion judgment value $C_{COL\_TH}$, Step S15 is advanced to. It should be noted that, in addition to this condition, the matter of a predetermined time having elapsed since initiating electrostatic particulate collection may be defined as the condition determining the completion of electrostatic particulate collection.

Herein, as stated above, the point of completing electrostatic particulate collection in response to the capacitance during particulate collection $C_{COL}$ having exceeding the completion judgment value $C_{COL\_TH}$ will be explained in detail.

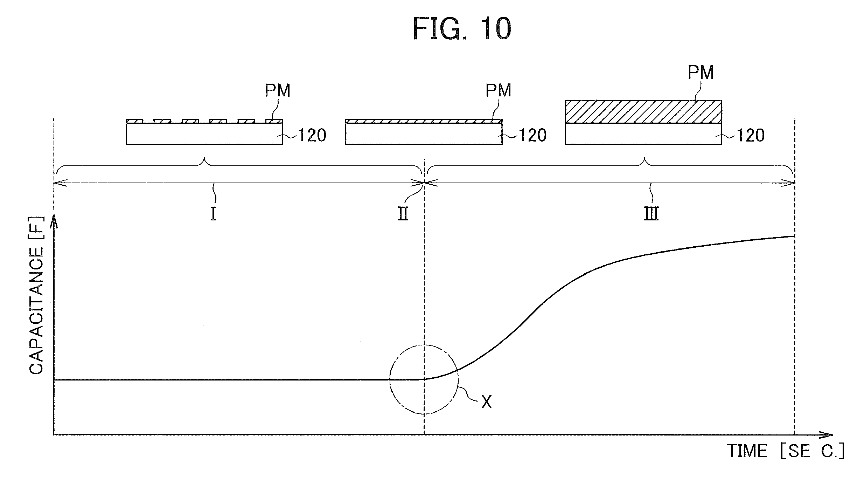

FIG. 10 is a graph showing a relationship between a deposition amount of PM in a case of PM being allowed to spontaneously adhere to the particulate collection portion 120 of the sensor element and the time course of the capacitance of the particulate collection portion 120. The horizontal axis in FIG. 10 represents time and the vertical axis represents capacitance.

In region I of FIG. 10, PM gradually deposits on an inner wall of the particulate collection portion 120 with the elapse of time; however, at first, there is only thin sparse deposition; therefore, there is no influence on the electrical characteristic of the particulate collection portion 120, and a change in capacitance is unnoticeable.

In region II, PM begins to thinly deposit entirely on the inner wall of the particulate collection portion 120 with the elapse of time, and as a result of becoming such that an influence on the electrical characteristic of the particulate collection portion 120 is imparted, the capacitance starts to increase.

In region III where time has further elapsed, PM thickly deposits to be dense over the entire surface on the inner wall of the particulate collection portion 120, and as a results of becoming such that a large influence on the electrical characteristic of the particulate collection portion 120 is exerted, the capacitance further increases and before long the capacitance converges at a constant value. That is, a maximum measureable capacitance exists for the PM sensor.

Incidentally, as shown in FIG. 10, the time of region I, in which a change in capacitance is unnoticeable, is very long. This means that a considerably long time (e.g., 1 to 2 hours in the case of normal operation being maintained) is required until PM deposits over the entire surface of the inner walls of the particulate collection portion 120 by spontaneous adhesion and a change in capacitance occurs. This fact means that, in the DPF failure detection processing of the present embodiment in which the judgment of DPF failure is performed based on the amount of change in the capacitance of the sensor element, a long time is required until initiating failure judgment.

On the other hand, if the particulate collection voltage is continually applied as is conventionally even after a change in capacitance has been observed, PM will be abundantly deposited, whereby the maximum measureable capacitance will be reached in a short time period.

As a result, the PM sensor of the present embodiment promotes deposition of PM by applying the particulate collection voltage, and the application of the particulate collection voltage is stopped to change to spontaneous adherence upon it becoming such that a change in the capacitance is apparent, i.e. upon the capacitance exceeding the aforementioned completion judgment value $C_{COL\_TH}$. Long term detection thereby becomes possible, while being able to establish a state in which the detection of PM in the exhaust is possible in a short time.

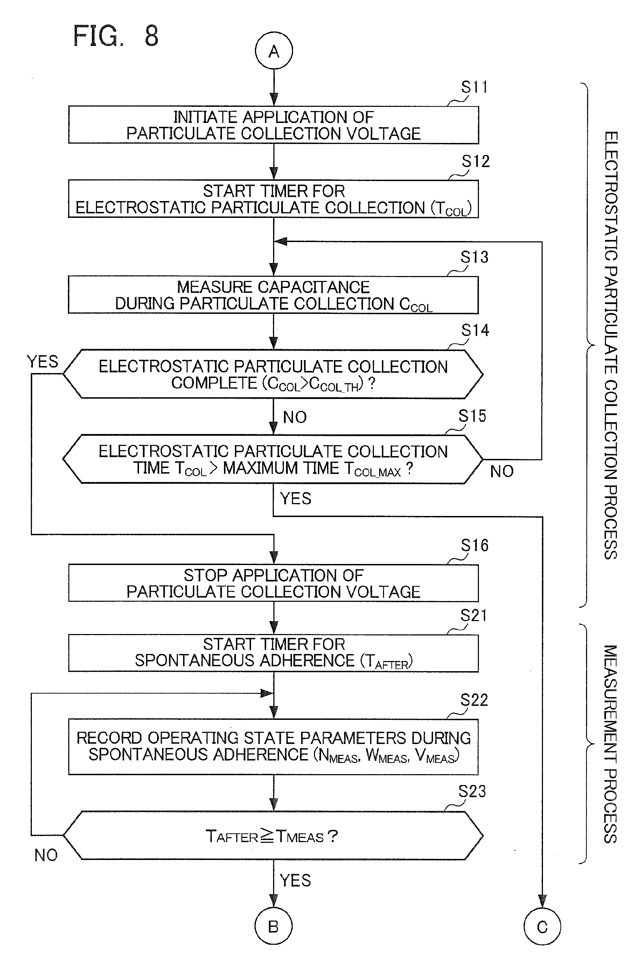

Referring back to FIG. 8, in Step S15, it is determined whether the electrostatic particulate collection time $T_{COL}$ has reached the predetermined maximum time $T_{COL\_MAX}$. In a case of this determination being YES, i.e. in a case of the capacitance $C_{COL}$ of the sensor element not having exceeded the completion judgment value $C_{COL\_TH}$ even if performing electrostatic particulate collection over the aforementioned maximum time $T_{MON}$, it is determined that PM is not being discharged downstream of the DPF, i.e. the DPF has not failed, and Step S34 is advanced to. In a case of this determination being NO, Step S13 is advanced to, and electrostatic particulate collection is continued.

In Step S16, the application of the particulate collection voltage to the particulate collection electrodes is stopped in response to the aforementioned condition for determining the completion of electrostatic particulate collection having been satisfied.

The measurement process (Steps S21 to S25) will be explained.

In this measurement process, a post spontaneous adherence capacitance $C_{PM}$ is measured after PM is allowed to spontaneously adhere over a predetermined maximum time $T_{MEAS}$.

In Step S21, the timer for spontaneous adherence is started, and measurement of a spontaneous adherence time $T_{AFTER}$ indicating a time for which PM has been allowed to spontaneously adhere is initiated.

In Step S22, the operating state parameters (revolution speed N, fuel injection amount W, and vehicle speed V) are measured, and these measured values are recorded as operating state parameters during spontaneous adherence (revolution speed $N_{MEAS}$ (T), fuel injection amount $W_{MEAS}$ (T), and vehicle speed $V_{MEAS}$ (T)).

In Step S23, it is determined whether the spontaneous adherence time $T_{AFTER}$ has reached the predetermined maximum time $T_{MEAS}$. In a case of this determination being YES, Step S24 is advanced to, and in a case of being NO, Step S22 is advanced to. It should be noted that hereinafter the period from starting the timer for spontaneous adherence in Step S21 until reaching the maximum time $T_{MEAS}$ is defined as the spontaneous adherence time.

In Step S24, the capacitance of the particulate collection portion is measured by applying the measurement voltage to the measurement electrodes, and this measured value is recorded as the post spontaneous adherence capacitance $C_{PM}$.

In Step S25, it is determined whether the emitted amount of PM in the spontaneous adherence period is at least a predetermined amount. In the present embodiment, the determination of whether the emitted amount of PM is at least a predetermined amount is performed indirectly, based on the operating state parameters during spontaneous adherence ($N_{MEAS}$, $W_{MEAS}$, and $V_{MEAS}$).

More specifically, in a case of the time for which the vehicle speed $V_{MEAS}$ exceeded a predetermined speed within the spontaneous adherence period being at least a predetermined time, and the fuel injection amount $W_{MEANS}$ having reached at least a predetermined value within the spontaneous adherence period, for example, it is determined that the emitted amount of PM in the spontaneous adherence period was at least a predetermined amount. In this step, in a case of having determined that the emitted amount of PM is at least a predetermined value, Step S31 is advanced to. In addition, in a case of having determined that the emitted amount of PM is less than the predetermined value, this processing is ended without performing the failure judgment process of Steps S31 to S35.

The failure judgment process (Steps S31 to S35) will be explained.

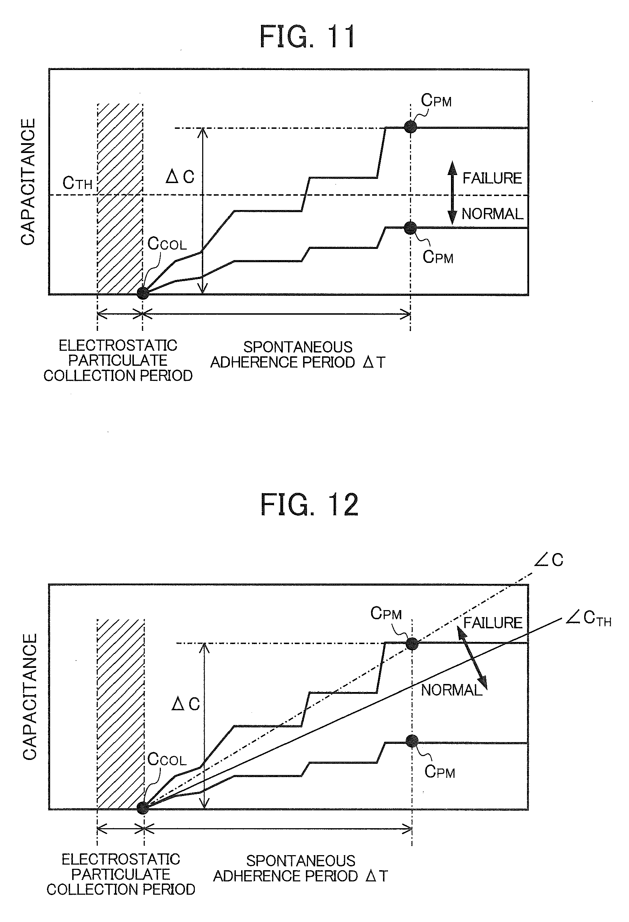

In this failure judgment process, failure of the DPF is judged based on the post spontaneous adherence capacitance $C_{PM}$ measured. As methods of performing DPF failure judgment based on the post spontaneous adherence capacitance $C_{PM}$, two that can be specifically exemplified are a method based on the amount of change $\Delta C$ in capacitance (refer to FIG. 11), and a method based on the rate of change C' (=$\Delta C/\Delta T$) in capacitance (refer to FIG. 12).

As shown in FIG. 11, in the method based on the amount of change in the capacitance $\Delta C$, the amount of change in capacitance $\Delta C$ over a predetermined spontaneous adherence period $\Delta T$ is calculated by subtracting the capacitance $C_{COL}$ during particulate collection initiation from the post spontaneous adherence capacitance $C_{PM}$. Furthermore, the amount of change $\Delta C$ thus calculated and a predetermined failure judgment value $C_{TH}$ are compared. In a case of the amount of change $\Delta C$ being larger than the failure judgment value $C_{TH}$, it is determined that the DPF is in a failed state, and in a case of the amount of change $\Delta C$ being no more than the failure judgment value $C_{TH}$, it is judged that the DPF is in a normal state.

As shown in FIG. 12, in the method based on the rate of change in capacitance C', the amount of change in capacitance $\Delta C$ over the spontaneous adherence period $\Delta T$ is calculated by the same procedure as described above. Next, the rate of change is calculated C' by dividing the amount of change $\Delta C$ thus calculated by the spontaneous adherence period $\Delta T$. Furthermore, the rate of change C' thus calculated and a predetermined failure judgment value $C'_{TH}$ are compared. In a case of the rate of change C' being larger than the failure judgment value $C'_{TH}$, it is judged that the DPF is in a failed state, and in a case of the rate of change C' being no more than the failure judgment value $C'_{TH}$, it is judged that the DPF is in a normal state.

In the DPF failure detection processing of the present embodiment, although DPF failure is judged by one method among the above two such methods that is based on the rate of change C', it is not limited thereto, as shown below.

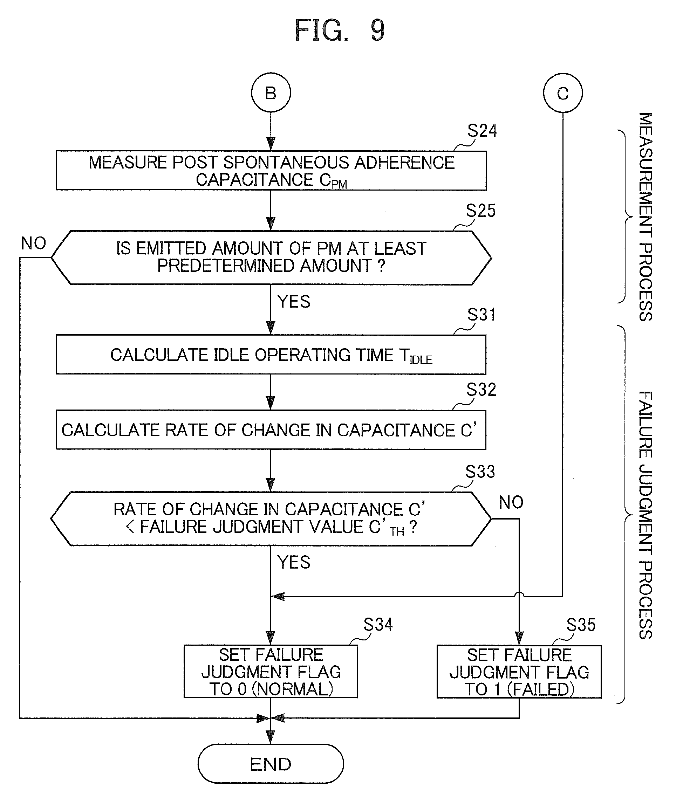

Referring back to FIG. 9, in Step S31, an idle operating time $T_{IDLE}$ is calculated based on the operating state parameters during spontaneous adherence recorded ($N_{MEAS}$, $W_{MEAS}$, $V_{MEAS}$). This idle operating time is calculated by adding the time for which the idle operating state was carried out in the spontaneous adherence period, i.e. the time for which the vehicle speed $V_{MEAS}$ was "0".

In Step S32, the rate of change in capacitance C' over the spontaneous adherence period is calculated. This rate of change in capacitance C' is calculated by dividing the amount of change $C_{PM}$-$C_{COL}$ in capacitance over the spontaneous adherence period by the time arrived at by subtracted the idle time $T_{IDLE}$ from the time $T_{AFTER}$ for which PM was allowed to spontaneously adhere, as shown in the following equation (1).

$$C' = (C_{PM}-C_{COL})/(T_{AFTER}-T_{IDLE}) \quad (1)$$

In Step S33, it is determined whether the rate of change in capacitance C' is smaller than the predetermined failure judgment value $C'_{TH}$. In a case of this determination being YES, it is judged that the DPF is in a normal state and Step S34 is advanced to, and then this processing is ended after the failure judgment flag is set to "0". In addition, in a case of this determination being NO, it is judged that the DPF is in a failed state and Step S35 is advanced to, and then this processing is ended after the failure judgment flag is set to "1". It should be noted that the warning light is illuminated in response to this failure judgment flag being set to "1".

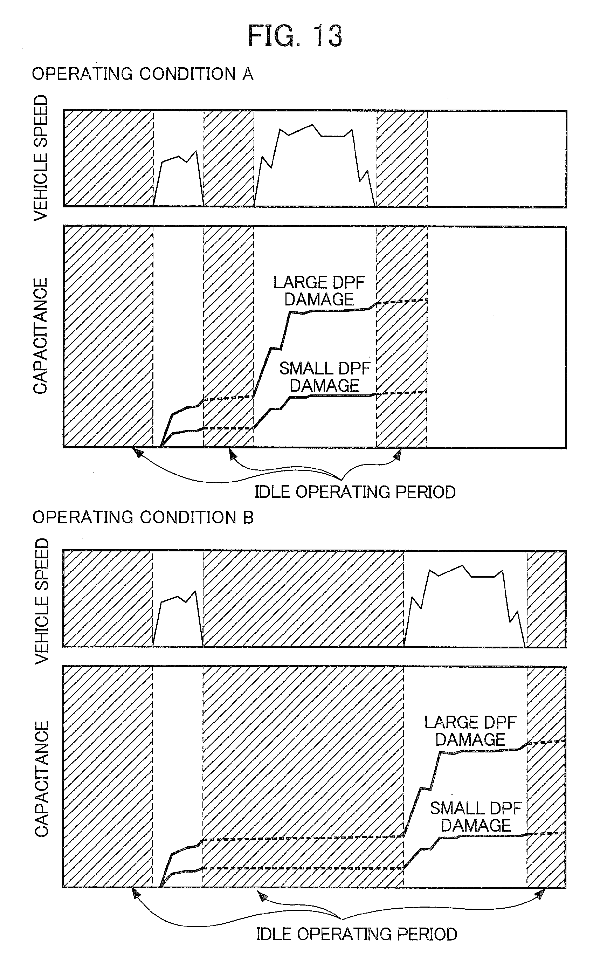

Herein, the reasons for subtracting the idle time $T_{IDLE}$ from the time $T_{AFTER}$ for which PM was allowed to spontaneously deposit upon calculating the rate of change in capacitance C' using the above equation (1), will be explained while referring to FIGS. 13 to 15.

FIG. 13 provides graphs showing the time course of the capacitance of the sensor element in a case of causing the engine to operate under two different operating conditions. In FIG. 13, the top shows the time course of the capacitance in a case of causing the engine to operate under operating condition A, and the bottom shows the time course of the capacitance in a case of causing the engine to operate under operating condition B. In addition, in the example shown in FIG. 13, results are shown of preparing two types of DPF's having different extents of damage, and measuring the capacitance of the particulate collection portion for each of these DPF's under the same operating conditions. In FIG. 13, the periods illustrated with hatching indicate the periods in which idle operation with a vehicle speed of "0" was performed. The periods in which idle operation was not being performed are then travel periods with a vehicle speed that is not "0".

As shown in FIG. 13, in the periods in which idle operation was performed, the emitted amount of PM is small, and thus the change in capacitance small. In addition, with this operating condition A and operating condition B, only the length of the periods for which idle operation was performed differ.

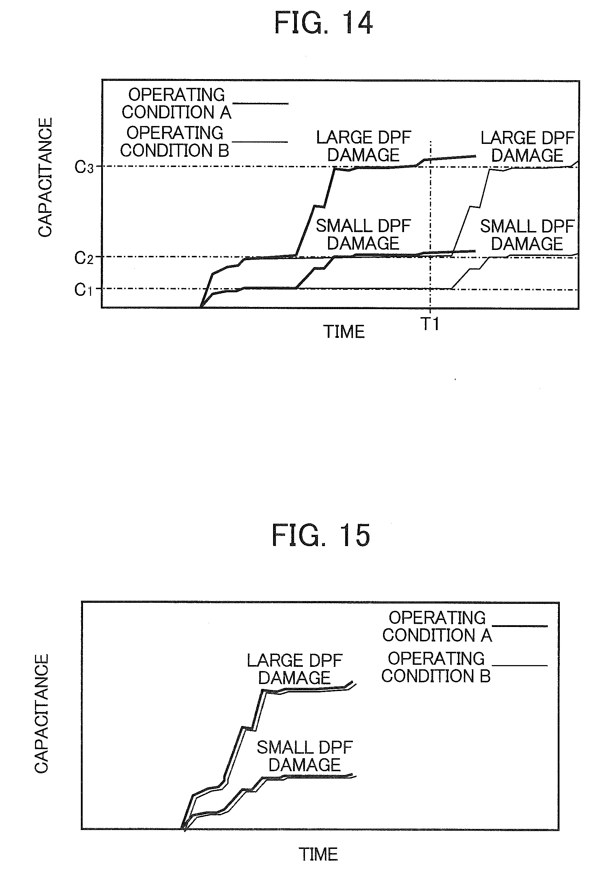

FIGS. 14 and 15 are graphs in which the time courses of the capacitance under the above such two different operating conditions A and B are shown as superimposed. More specifically, FIG. 15 shows a graph excluding the periods in the time course of capacitance in which idle operation was performed. In contrast, FIG. 14 shows a graph not excluding the periods in the time course of capacitance in which idle operation was performed. In addition, FIGS. 14 and 15 show the time course of capacitance under operating condition A by a bold line, and show the time course under operating condition B by a thin line.

Herein, the time course of capacitance measured under operating conditions A using a DPF having a small degree of damage and the time course of capacitance measured under operating conditions B with a large degree of damage are compared by referring to FIG. 14.

Under operating condition A, the capacitance reaches $C_1$ through the initial traveling period, and reaches $C_2$ through the second traveling period. On the other hand, under operating condition B, the capacitance reaches $C_2$ through the initial traveling period, and reaches $C_3$ through the second traveling period.

While the two DPF's have different degrees of damage in this way, which is caused by the length of the idle operation differing between operating condition A and operating condition B, there is a period in which the measured value of capacitance is the same at $C_2$. Therefore, in a case of performing judgment of DPF failure based on the post spontaneous adherence capacitance $C_{PM}$ at time T1, for example, since the amount of change in capacitance is the same in either measurement, the result of judgment will be the same. This means that, since an apparent amount of change in capacitance becomes small following the period of performing idle operation lengthening, there is a tendency for misjudgment on the normal side.

In contrast, as shown in FIG. 15, the time course of capacitance under operating condition A and the time course of capacitance under operating condition B can be made to agree by taking only periods in which PM was actually being discharged into account, excluding periods in which idle operation is performed after a period of allowing spontaneous adherence. The aforementioned such misjudgment can thereby be prevented.

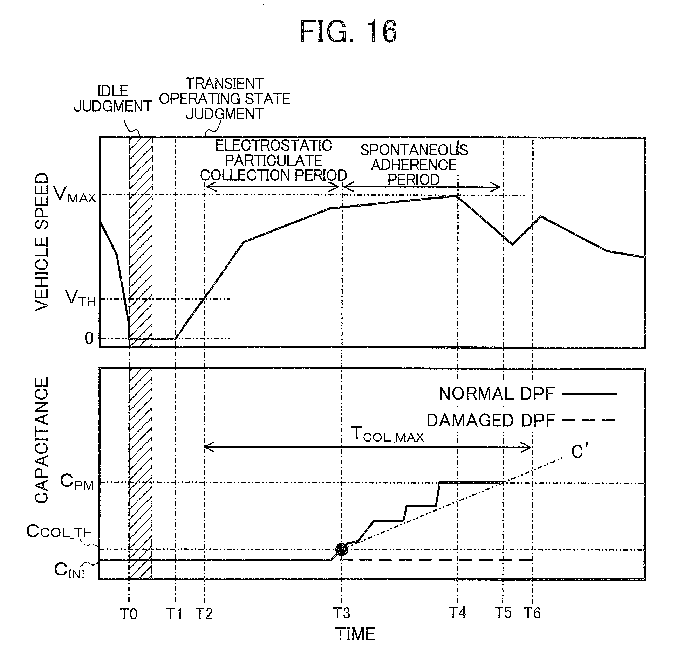

FIG. 16 is a flowchart showing a control example of DPF failure detection processing. In FIG. 16, the top shows the time course of vehicle speed, and the bottom shows the time course of the capacitance of the sensor element. In addition, in FIG. 16, the time course of capacitance in a case of using a normal DPF is shown by the dotted line, and the time course of capacitance in a case of using a damaged DPF is shown by the solid line.

In this control example, an example is shown in which idle operation is performed from time T0 until time T1, and then accelerating from a stopped state until the vehicle speed reaches $V_{MAX}$ from time T1 until time T4. It should be noted that the capacitance of the sensor element at time T0 is defined as $C_{INI}$.

In the case of using a damaged DPF, failure thereof is detected according to the following sequence.

It is determined that the idle operating state continued for at least the idle judgment time $T_{TH\_IDLE}$ during the period from time T0 until time T1 (Step S4). Thereafter, it is determined that the operating state of the engine has entered a transient state by accelerating from a stable operating state of the engine and the vehicle speed exceeding the judgment speed $V_{TH}$ at time T2 (Steps S6 and S7).

At time T2, in response to having determined that the operating state of the engine is a transient operating state, the application of the particulate collection voltage is initiated (Step S11), and PM is gradually collected in the particulate collection portion. Thereafter, the duration until ending the application of the particulate collection voltage at time T3 becomes the electrostatic particulate collection period. The capacitance of the particulate collection portion starts to rise from applying the particulate collection voltage and PM depositing in the particulate collection portion.

At time T3, the application of the particulate collection voltage is stopped in response to having determined that the measured value of the capacitance of the particulate collection portion has exceeded the completion judgment value $C_{COL\_TH}$ (Steps S14 and S16). Thereafter, it is a spontaneous adherence period. At time T5, the post spontaneous adherence capacitance $C_{PM}$ is measured in response to the aforementioned maximum time $T_{MEAS}$ having elapsed since starting to allow PM to spontaneously adhere (Steps S23 and S24). In addition, after the rate of change in capacitance C' is calculated based on this post spontaneous adherence capacitance $C_{PM}$, the rate of change in capacitance C' thus calculated and the failure judgment value $C'_{TH}$ are compared, and DPF failure is judged based on this comparison (Steps S32 to S35). Herein, it is judged that the DPF has failed in response to determining that the rate of change in capacitance C' is greater than the failure judgment value $C'_{TH}$.

On the other hand, in a case of using a normal DPF, the capacitance of the sensor element will not exceed the completion judgment value $C_{COL\_TH}$, even if initiating the application of the particulate collection voltage from time T2. As a result, it is judged that the DPF is normal in response to determining that the maximum time $T_{COL\_MAX}$ of electrostatic particulate collection has elapsed at time T6 (Steps S15 and S34).

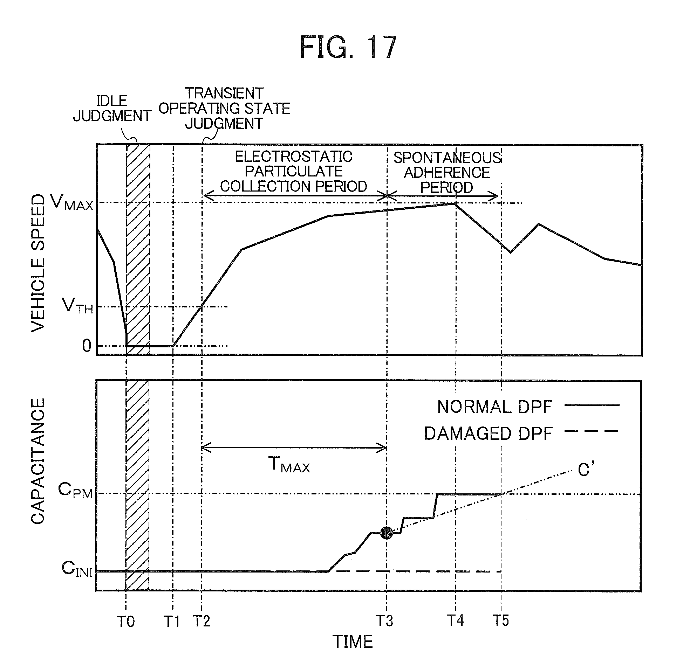

FIG. 17 is a time chart showing a control example of DPF failure detection processing. FIG. 17 shows a control example, which differs from the control example shown in FIG. 16, for a case of a predetermined maximum time $T_{MAX}$ having elapsed since initiating electrostatic particulate collection being set as the condition for determining the completion of electrostatic particulate collection.

This control example, similarly to the example shown in FIG. 16, shows an example in which idle operation is performed from time T0 until time T1, and then accelerating from a stopped state until the vehicle speed is $V_{MAX}$ from T1 until T4.

In a case of using a damaged DPF, failure thereof is detected according to the following sequence.

It is determined that the idle operating state continued for at least the idle judgment time $T_{TH\_IDLE}$ during the period from time T0 until time T1. Thereafter, it is determined that the operating state of the engine has entered a transient state by accelerating from a stable operating state of the engine and the vehicle speed exceeding the judgment speed

$V_{TH}$ at time T2.

At time T2, in response to having determined that the operating state of the engine is a transient operating state, the application of the particulate collection voltage is initiated, and PM is gradually collected in the particulate collection portion. Thereafter, the duration until ending the application of the particulate collection voltage at time T3 becomes the electrostatic particulate collection period. The capacitance of the particulate collection portion starts to rise from applying the particulate collection voltage and PM depositing in the sensor element.

At time T3, the application of the particulate collection voltage is stopped in response the maximum time $T_{MAX}$ having elapsed since initiating electrostatic particulate collection. Thereafter, it is a spontaneous adherence period. At time T5, the post spontaneous adherence capacitance $C_{PM}$ is measured in response to the maximum time $T_{MEAS}$ having elapsed since starting to allow PM to spontaneously adhere. In addition, after the rate of change in capacitance C' is calculated based on this post spontaneous adherence capacitance $C_{PM}$, the rate of change in capacitance C' thus calculated and the failure judgment value $C'_{TH}$ are compared, and DPF failure is judged based on this comparison. Herein, it is judged that the DPF is failed in response to determining that the rate of change C' in capacitance is greater than the failure judgment value $C'_{TH}$.

On the other hand, in a case of using a normal DPF, the capacitance will not change greatly from $C_{INI}$, even if performing electrostatic particulate collection from time T2 to time T3, and subsequently allowing spontaneous adherence until time T5. As a result, it is judged that the DPF is normal in response to determining that the rate of change in capacitance C' is less than the failure judgment value $C'_{TH}$.

According to the present embodiment, a sufficient amount of PM can be made to adhere to the sensor element 12 in a short time by applying the particulate collection voltage to the particulate collection electrodes 123A and 128A, and thus a state in which a change in the capacitance of the sensor element 12 becomes apparent can be established early on. As a result, the state in which a change in the electrical characteristic becomes apparent in a short time on the order of 30 seconds, for example, is established, and thus judgment of DPF failure can be initiated. In other words, since the responsiveness is high, it is possible to judge DPF failure at any timing during vehicle operation.

In addition, when measuring the capacitance of the sensor element 12 and judging DPF failure, the application of the particulate collection voltage to the particulate collection electrodes 123A and 128A is not carried out; therefore, PM slowly and spontaneously adheres to the sensor element 12, and the capacitance of the sensor element 12 changes gradually, whereby DPF failure can be judged over a long time. Therefore, false detection of DPF failure can be reduced, by excluding the main causes for irregular fluctuation.

In addition, in the present embodiment, the two electrodes of the particulate collection electrodes 123a and 128A and the measurement electrodes 127A and 127B are provided; therefore, while performing collection of particulate matter by applying the particulate collection voltage to the particulate collection electrodes 123A and 128A, it is possible to measure the capacitance of the sensor element 12 by applying the measurement voltage to the measurement electrodes 127A and 127B. As a result, the aforementioned effects can be expected also from being able to accurately determine a suspended period of particulate collection in real-time.

In addition, since it is possible to judge DPF failure over a long period of time, the number of times repeating the processes of particulate collection, measurement and regeneration can be reduced, whereby it is possible to decrease the consumption of electrical power accompanying particulate collection and the application of voltage to the heater.

Furthermore, according to the present embodiment, in the duration from initiating the application of particulate collection voltage to the particulate collection electrodes 123A and 128A until the predetermined maximum time $T_{COL\_MAX}$ elapses, the DPF is judged to be normal in a case of the capacitance $C_{COL}$ of the sensor element not having exceeded the completion judgment value $C_{COL\_MAX}$. In a case of the DPF being normal, PM emitted from the engine is mostly collected in this DPF. As a result, the amount of PM flowing into the sensor element provided downstream of the DPF is extremely small, and it is difficult for a change in the electrical characteristic of the sensor element to become apparent. According to the present embodiment, by judging DPF failure by employing such a characteristic of the sensor element, it is possible to improve the detection accuracy of DPF failure.

In addition, according to the present embodiment, a particulate collection voltage that is higher than the measurement voltage is applied to the particulate collection electrodes 123A and 128A. It is thereby possible to cause PM to actively adhere to the sensor element 12 when applying the particulate collection voltage. On the other hand, it is possible to prevent PM from unnecessarily adhering to the sensor element 12 when applying the measurement voltage.

In addition, according to the present embodiment, in a case of the operating state of the engine not being a transient operating state, i.e. in a case of the operating state of the engine being a steady operating state, the particulate collection voltage is not applied. In the case of the engine being in a steady operating state, the emitted amount of PM is extremely small. As a result, in a case of being in a steady operating state, it is difficult to cause an amount of PM to adhere to the sensor element 12 to an extent for which a change in the electrical characteristic of the sensor element 12 becomes apparent in a short time, even if applying the particulate collection voltage. Therefore, by configuring so that the particulate collection voltage is not applied in such a transient operating state, it is possible to suppress the wasteful consumption of electric power used in the application of the particulate collection voltage.

In addition, according to the present embodiment, in a case of the emitted amount of PM within a spontaneous adherence period being less than a predetermined amount, judgment of DPF failure is not performed. In a case of the emitted amount of PM in a spontaneous adherence period in which particulate matter is allowed to adhere to the sensor element 12 being small, it is considered that the change in the electrical characteristic of the sensor element 12 will be small irrespective of the state of the DPF; therefore, failure cannot be detected with high accuracy. According to the present embodiment, the detection accuracy for DPF failure can be prevented from declining by configuring so that judgment of failure is not performed in such a period.

In addition, according to the present embodiment, DPF failure is judged based on the amount of change $\Delta C$ in a measured value of the capacitance of the sensor element 12 over the spontaneous adherence period. In a case of the DPF failing, some of the PM emitted from the engine will pass through the DPF and reach the sensor element 12. As a result, it is considered that a large influence on the amount of change $\Delta C$ in the measured value over the aforementioned spontaneous adherence period will become apparent. According to the present embodiment, it is possible to improve the detection accuracy for DPF failure by judging failure based on the above-mentioned amount of change $\Delta C$ for which a large influence from the state of such a DPF is apparent.

In addition, according to the present embodiment, a time arrived at by subtracting from the spontaneous adherence period $T_{AFTER}$ the idle operating time $T_{IDLE}$ for which the engine is operated in an idle operating state with an emitted amount of PM less than a predetermined amount is set as an effective emission time ($T_{AFTER}$-$T_{IDLE}$), and in a case of the rate of change in capacitance C' of the sensor element 12 over this effective emission time being less than a predetermined failure judgment value C'$_{TH}$, the DPF is judged to be normal. The detection accuracy of DPF failure can be further improved by judging DPF failure based on the rate of change in capacitance C' over the effective emission time excluding the time for which the engine was operated in an operating state in which the emitted amount of particulate matter is small such as an idle operating state.

In addition, according to the present embodiment, the application of the particulate collection voltage to the particulate collection electrodes 123A and 128A is stopped in response to the capacitance $C_{COL}$ of the sensor element 12 having exceeded the predetermined completion judgment value $C_{COL\_TH}$ since initiating the application of the particulate collection voltage to the particulate collection electrodes 123A and 128A. It is thereby possible to establish a state in which change in the capacitance of the sensor element 12 becomes apparent at an early stage more reliably. Therefore, it is possible to shorten the time required in detecting DPF failure. In addition, by stopping the application of particulate collection voltage after a change in capacitance becomes apparent, the consumption of excess electrical power can be reduced.

In the present embodiment, the particulate collection electrodes 123A and 128A configure a first electrode portion, the measurement electrodes 127A and 127B configure a second electrode portion, the ECU 5 and the sensor controller 17 of the sensor element 12 configure a voltage application initiating means, first measurement means, voltage application stop means, second measurement means, failure judgment means, transient operation state determination means, and emitted amount determination means.

More specifically, the means related to the execution of Step S11 in FIG. 8 configure the voltage application initiation means, the means related to the execution of Step S13 in FIG. 8 configure the first measurement means, the means related to the execution of Step S16 in FIG. 8 configure the voltage application stop means, the means related to the execution of Step S24 in FIG. 9 configure the second measurement means, the means related to the execution of Steps S31 to S35 in FIG. 9 configure the failure judgment means, the means related to the execution of Steps S6 and S7 in FIG. 7 configure the transient operating state determination means, and the means related to the execution of Step S25 in FIG. 9 configure the emitted amount determination means.

Second Embodiment

In a failure detection device for an exhaust purification filter according to a second embodiment, the configurations of a PM sensor 31, sensor controller and ECU differ from the PM sensor 11, sensor controller 17 and ECU 5 of the first embodiment.

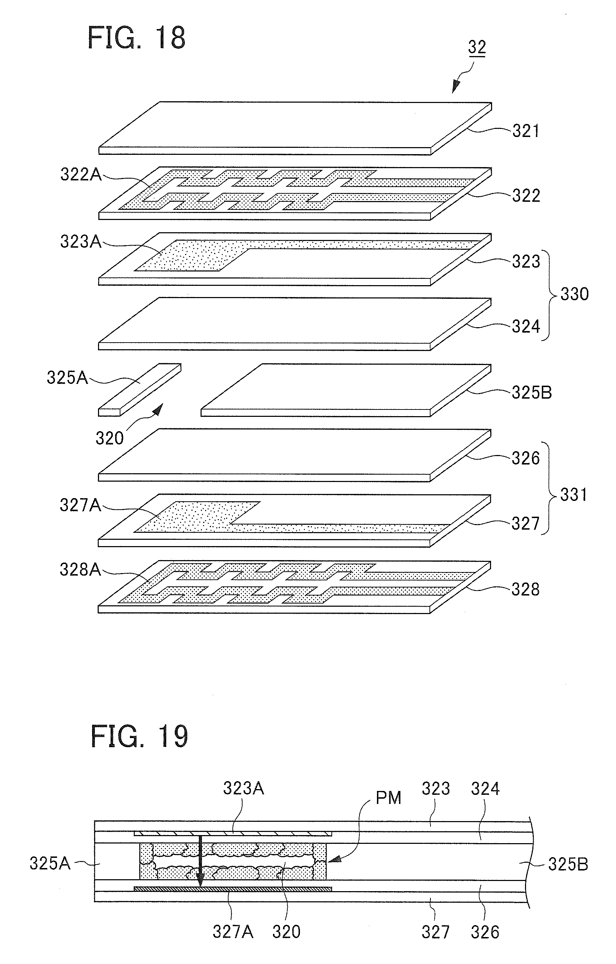

FIG. 18 is an exploded perspective view of the sensor element 32 of the PM sensor 31 related to the second embodiment.

As shown in FIG. 18, the configuration of the sensor element 32 is similar to the configuration of the PM sensor 11 related to the first embodiment except for being without a measurement electrode layer. In the present embodiment, measurement electrodes as in the first embodiment are not provided, and particulate collection electrodes 323A and 327A function as both particulate collection electrodes and measurement electrodes. The particulate collection electrodes 323A and 327A are connected to the impedance measuring instrument and the DC power source for particulate collection via a change-over switch.

The change-over switch operates based on a control signal sent from the ECU, and selectively changes a connection to the electrode plates 330 and 331 between the DC power source for particulate collection and the impedance measuring instrument. More specifically, in a case of applying particulate collection voltage to the particulate collection electrodes 323A and 327A, the DC power source for particulate collection and the electrode plates 330 and 331 are connected, and in a case of measuring the capacitance of the sensor element 32, the impedance measuring instrument and the electrode plates 330 and 331 are connected.

FIG. 19 is a view schematically illustrating an appearance when PM is collected inside of the particulate collection portion 320 of the sensor element 32 of the present embodiment. As shown in FIG. 19, PM being collected deposits on an inner wall inside the particulate collection portion 320. At this time, the capacitance of the particulate collection portion 320 is influenced by the PM thus deposited, and thus changes. From this change in capacitance being correlated to the PM deposition amount, it becomes possible to detect PM based on the change in this capacitance. In addition, similarly to the first embodiment, the electrical characteristic of the sensor element 32 means an electrical characteristic of the particulate collection portion 320 in the sensor element 32 that is correlated to an amount of PM deposited in the present embodiment as well.

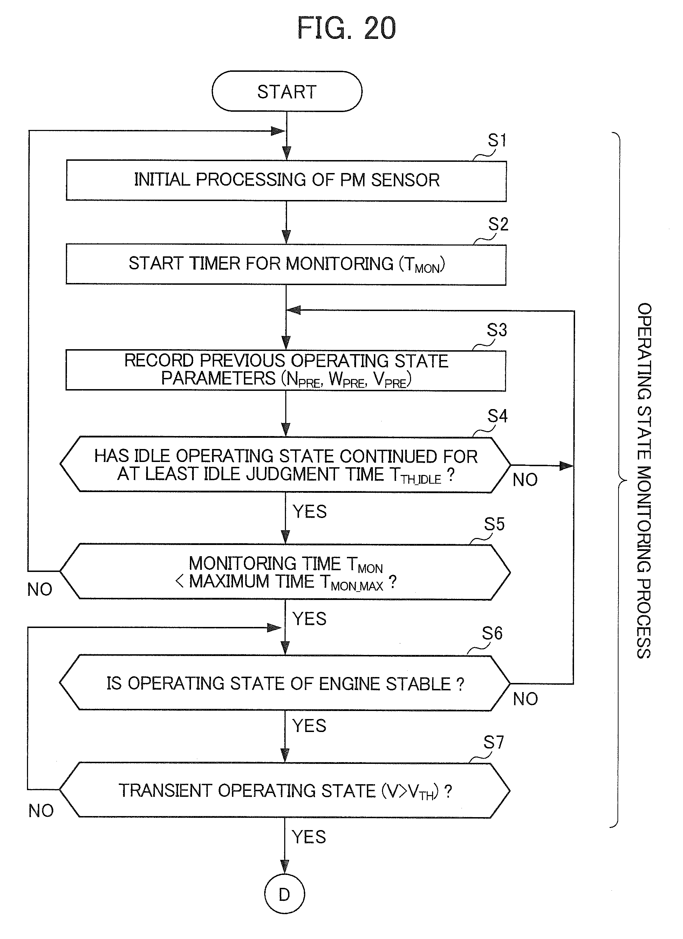

FIGS. 20 to 22 are flowcharts showing sequences of DPF failure detection processing. Hereinafter, this DPF failure detection processing is processing of judging that the DPF is in a normal state or is in a failed state based on the output of the PM sensor, as described in detail later, and is executed by the ECU after startup of the engine.

Similarly to the DPF failure detection processing of the first embodiment, this DPF failure detection processing is divided into the four processes of an operating state monitoring process (Steps S1 to S7), an electrostatic particulate collection process (Steps S11 to S17), a measurement process (Steps S21 to S25), and a failure judgment process (Steps S31 to S35).

The operating state monitoring process (Steps S1 to S7) and the failure judgment process (Steps S31 to S35) are the same as in the DPF failure detection processing of the first embodiment, and detailed explanations thereof will be omitted.

The electrostatic particulate collection process (Steps S11 to S17) will be explained.

In this electrostatic particulate collection process, electrostatic particulate collection is performed by applying the particulate collection voltage to the particulate collection electrodes until a predetermined condition is satisfied.

In Step S11, a timer for electrostatic particulate collection is started, and measurement of an electrostatic particulate collection time $T_{COL}$ indicating the time performing electrostatic particulate collection is initiated.

In Step S12, a timer for application time measurement is started along with initiating the application of the particulate collection voltage to the electrode portions, and measurement of an application time T indicating the time for which the particulate collection voltage has been applied is initiated.

In Step S13, it is determined whether at least a predetermined time $T_{MAX}$ has elapsed since applying the particulate collection voltage. In a case of this determination being YES, Step S14 is advanced to, and in a case of being NO, Step S13 is advanced to.

In Step S14, the timer for application time measurement is reset along with stopping the application of the particulate collection voltage to the electrode portions.

In Step S15, the capacitance of the particulate collection portion is measured by applying measurement voltage to the electrode portions, and this measured value is recorded as a capacitance during particulate collection $C_{COL}$.

In Step S16, it is determined whether a predetermined condition set in order to determine the completion of electrostatic particulate collection has been satisfied. In the present embodiment, the capacitance during particulate collection $C_{COL}$ thus measured exceeding a predetermined completion judgment value $C_{COL\_TH}$ is defined as the condition determining the completion of electrostatic particulate collection. In a case of this determination being YES, i.e. in a case of the capacitance during particulate collection $C_{COL}$ being larger than the completion judgment value $C_{COL\_THF}$ Step S21 is advanced to. In a case of this determination being NO, i.e. in a case of the capacitance during particulate collection $C_{COL}$ being no more than the completion judgment value $C_{COL\_TH}$, Step S17 is advanced to. It should be noted that, in addition to this condition, the matter of a predetermined time having elapsed since initiating electrostatic particulate collection may be defined as the condition determining the completion of electrostatic particulate collection.

In Step S17, it is determined whether the electrostatic particulate collection time $T_{COL}$ has reached the predetermined maximum time $T_{COL\_MAX}$. In a case of this determination being YES, i.e. in a case of the capacitance C of the particulate collection portion not having exceeded the completion judgment value $C_{COL\_TH}$ even if performing electrostatic particulate collection, it is determined that PM is not being discharged downstream of the DPF, i.e. judged that the DPF has not failed, and Step S34 is advanced to. In a case of this determination being NO, Step S12 is advanced to, and electrostatic particulate collection is continued.

The measurement process (Steps S21 to S25) will be explained.

In this measurement process, the post spontaneous adherence capacitance $C_{PM}$ is measured after having allowing PM to spontaneously adhere over the predetermined maximum time $T_{MEAS}$.

In Step S21, a timer for spontaneous adherence is started, and measurement of the spontaneous adherence time $T_{AFTER}$ indicating the time for which PM has been allowed to spontaneously adhere is initiated.

In Step S22, the operating state parameters (revolution speed N, fuel injection amount W, and vehicle speed V) are measured, and these measured values are recorded as operating state parameters during spontaneous adherence (revolution speed $N_{MEAS}$ (T), fuel injection amount $W_{MEAS}$ (T), and vehicle speed $V_{MEAS}$ (T)).

In Step S23, it is determined whether the spontaneous adherence time $T_{AFTER}$ has reached the predetermined maximum time $T_{MEAS}$. In a case of this determination being YES, Step S24 is advanced to, and in a case of being NO, Step S22 is advanced to.

In Step S24, the capacitance of the sensor element is measured by applying the measurement voltage to the electrode portions, and this measured value is recorded as the post spontaneous adherence capacitance $C_{PM}$.

In Step S25, it is determined whether the emitted amount of PM in the spontaneous adherence period is at least a predetermined amount. In the present embodiment, the determination of whether the emitted amount of PM is at least a predetermined amount is estimated indirectly, based on the operating state parameters during spontaneous adherence ($N_{MEAS}$, $W_{MEAS}$, and $V_{MEAS}$). In a case of determining that the emitted amount of PM is at least the predetermined amount in this step, Step S31 is advanced to. In addition, in a case of determining that the emitted amount of PM is less than the predetermined amount, this processing is ended without performing the failure judgment process of Steps S31 to S35.

According to the present embodiment, except for the aspect of including two electrode portions, the same effects as the first embodiment are exerted.

In addition, in the present embodiment, the particulate collection electrodes 323A and 327A configure the electrode portions, and the ECU and the sensor controller of the sensor element configure a voltage application means, first measurement means, judgment means, second measurement means, failure judgment means, transient operating state determination means, and emitted amount determination means.

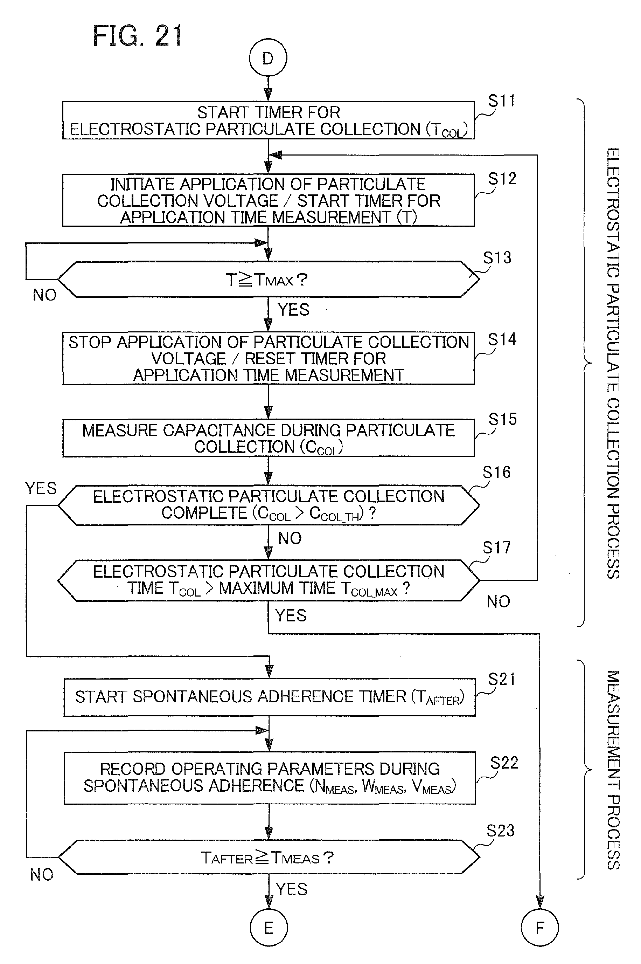

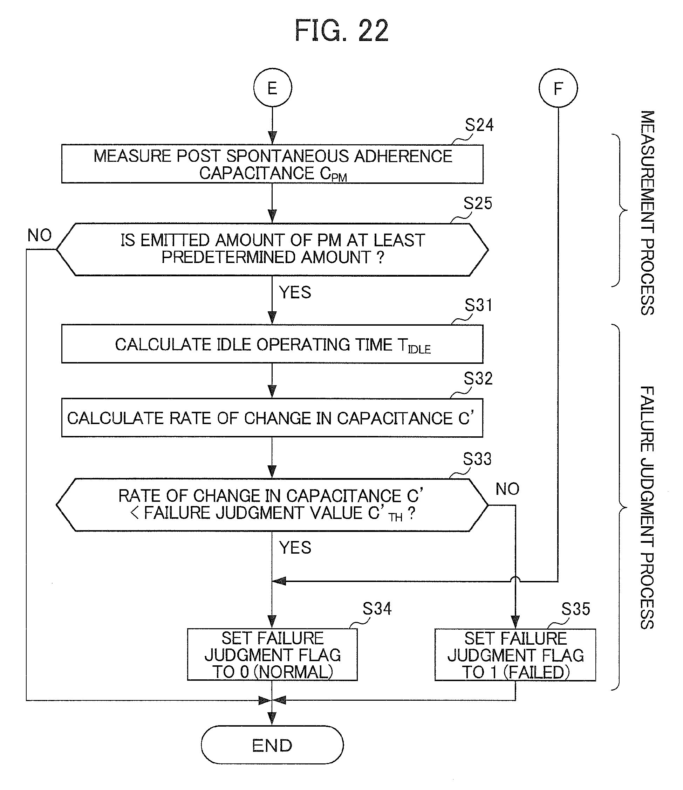

More specifically, the means related to the execution of Steps S12 and S13 in FIG. 21 configure the voltage application means, the means related to the execution of Step S15 in FIG. 21 configure the first measurement means, the means related to the execution of Step S16 in FIG. 21 configure the judgment means, the means related to the execution of Step S24 in FIG. 22 configure the second measurement means, the means related to the execution of Steps S31 to S35 in FIG. 22 configure the failure judgment means, the means related to the execution of Steps S6 and S7 in FIG. 20 configured to transient operating state determination means, and the means related to the execution of Step S25 in FIG. 22 configure the emitted amount determination means.

Third Embodiment

In a failure detection device for an exhaust gas purification filter according to a third embodiment, the configuration of the ECU differs from the first embodiment.

Although DPF failure is detected based on the measured value of capacitance in the first embodiment, the aspect of calculating a PM concentration in the exhaust from the measured value of capacitance and judging DPF failure based on this PM concentration in the present embodiment differs from the first embodiment.

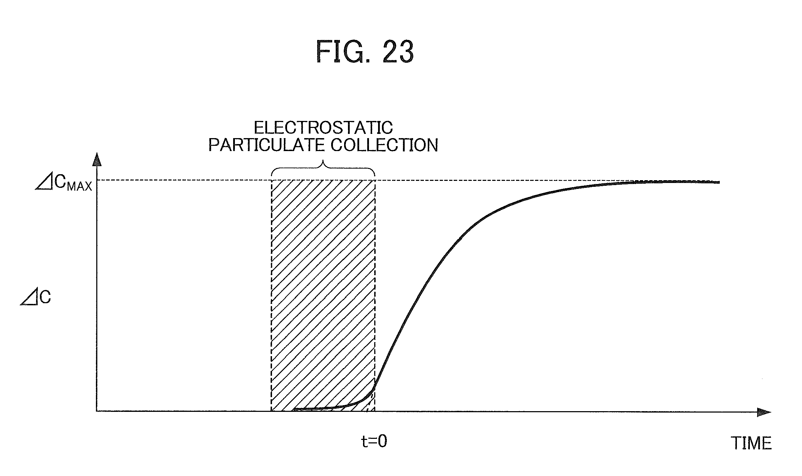

FIG. 23 is a graph showing the change in the measured value of capacitance in a case of allowing the PM sensor to operate in exhaust of a predetermined PM concentration. FIG. 23 is a graph setting the horizontal axis as time t and the vertical axis as the capacitance $\Delta C$, and showing the time course of capacitance $\Delta C$ after having applied the particulate collection voltage over a predetermined period. As shown in this figure, when the application of the particulate collection voltage is stopped at time t=0, the capacitance $\Delta C$ asymptotically approaches a predetermined value $\Delta C_{MAX}$ thereafter.

In this case, the relationship expressed by the following equation (2) holds true between the capacitance $\Delta C$ and PM concentration x from time t=0 onwards, i.e. in the period in which PM is allowed to spontaneously adhere.

$$\Delta C = \Delta C_{MAX}(1 - \exp(-k(x) \cdot t)) \qquad (2)$$

It should be noted that, in the above equation (2), the function k(x) of the PM concentration x is defined by predetermined functions a(N,T) and b(N,T) of the generated torque T calculated based on the engine revolution speed N and fuel injection amount W, as shown in the following equation (3).

$$k(x) = a(N,T)x + b(N,T) \qquad (3)$$

Herein, when the above equation (2) is differentiated with respect to time, the following equation (4) is derived.

$$k(x) = (\Delta C_{MAX} / (\Delta C_{MAX} - \Delta C)) \cdot d\Delta C/dt \quad (4)$$

Therefore, the PM concentration x of the exhaust can be derived by measuring the capacitance $\Delta C$ at a predetermined time and the time differential $\Delta C/dt$ thereof, with $\Delta C_{MAX}$ as a constant inherent to every sensor element, and furthermore, searching a map for deciding $a(N, T)$ and $b(N, T)$ based on the engine revolution speed N and generated torque T at this time.

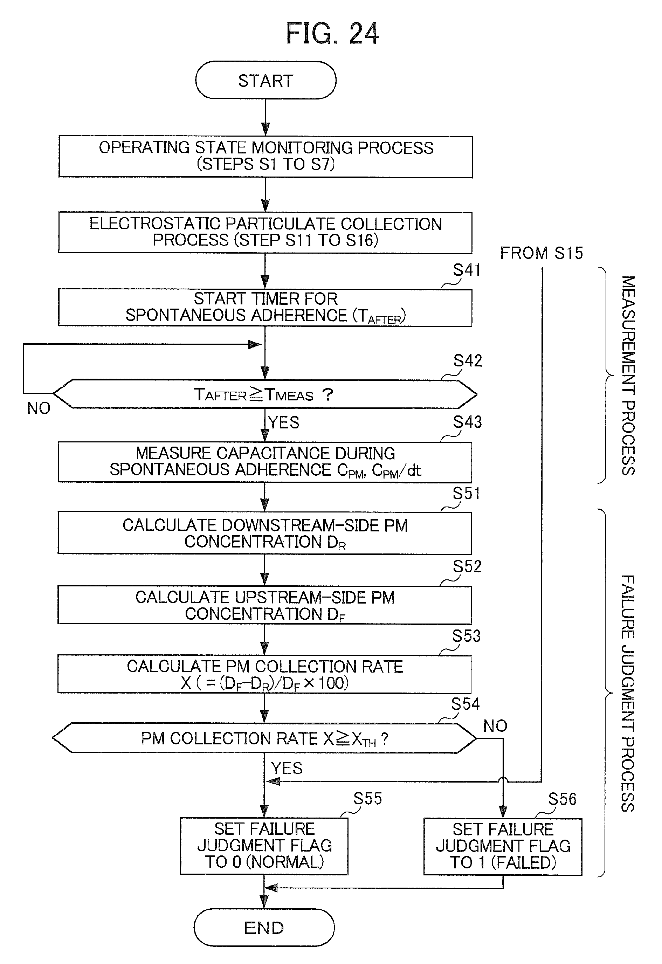

FIG. 24 is a flowchart showing a sequence of DPF failure detection processing.

Similarly to the DPF failure detection processing of the first embodiment, this DPF failure detection processing is divided into the four processes of an operating state monitoring process (Steps S1 to S7), an electrostatic particulate collection process (Steps S11 to S16), a measurement process (Steps S41 to S43), and a failure judgment process (Steps S51 to S56). It should be noted that, since the operating state monitoring process and electrostatic particulate collection process are the same as in the DPF failure detection processing of the first embodiment, detailed explanations and illustrations thereof will be omitted.

The measurement process (Steps S41 to S43) will be explained.

In Step S41, a timer for spontaneous adherence is started, and measurement of the spontaneous adherence time $T_{AFTER}$ indicating a time for which PM is allowed to spontaneously adhere is initiated.

In Step S42, it is determined whether the spontaneous adherence time $T_{AFTER}$ has reached a predetermined maximum time $T_{MEAS}$. In a case of this determination being YES, i.e. in a case of the maximum time $T_{MEAS}$ having elapsed since initiating the spontaneous adherence of PM, Step S43 is advanced to. On the other hand, in a case of this determination being NO, Step S42 is executed again to wait for the maximum time $T_{MEAS}$ to elapse.

In Step S43, the capacitance of the particulate collection portion is measured by applying the measurement voltage to the measurement electrodes, and this measured value is recorded as the post spontaneous adherence capacitance $C_{PM}$. Also at the same time, the time derivative value of the post spontaneous adherence capacitance $C_{PM}$ is calculated based on the time course of the measured value, and this measured value is recorded as the derivative value $dC_{PM}/dt$ of capacitance.

The failure judgment process (Steps S51 to S56) will be explained.

In Step S51, the PM concentration $D_R$ of the exhaust on a downstream side of the DPF is calculated based on the post spontaneous adherence capacitance $C_{PM}$ and derivative value $dC_{PM}/dt$ thereof thus measured in the above Step S43, and the engine revolution speed N and generated torque T at this time.

In Step S52, the PM concentration $D_F$ of the exhaust on an upstream side of the DPF is calculated based on the operating state of the engine such as the engine revolution speed N and fuel injection amount W at the time measuring the post spontaneous adherence capacitance $C_{PM}$ used in the calculation of the PM concentration $D_R$.

In Step S53, the PM collection rate X indicating a proportion of particulate matter collected in the DPF is calculated based on the PM concentration $D_F$ of the exhaust on an upstream side of the DPF and the PM concentration $D_R$ of the exhaust on a downstream side of the DPF. More specifically, for this PM collection rate X, the PM collection rate X of the DPF defined by the following equation (5) is calculated.

$$X = (D_F - D_R) / D_F \times 100 \quad (5)$$

In Step S54, it is determined whether the PM collection rate X thus calculated is larger than a predetermined failure judgment value $X_{TH}$. In a case of this determination being YES, it is judged that the DPF is normal and Step S55 is advanced to, and this processing is ended after setting the failure judgment flag to "0". In a case of this determination being NO, it is judged that the DPF is in a failed state and Step S56 is advanced to, and this processing is ended after setting the failure judgment flag to "1".

According to the present embodiment, failure of the DPF is judged based on the PM concentration $D_F$ on an upstream side of the DPF, in addition to the PM concentration $D_R$ on the downstream side of the DPF. It is thereby possible to further improve the judgment accuracy for DPF failure. For example, in a low-load operating state or an idle operating state, the amount of PM emitted from the engine is small, and almost all thereof will be collected in the DPF; therefore, the amount of PM emitted to the downstream side of the DPF will be extremely small. In contrast, with the present embodiment, DPF failure can be accurately determined also in such a low-load operating state and idle operating state by determining DPF failure based on the PM concentration $D_F$ on an upstream side, which can be detected with higher accuracy than the downstream side, in addition to on the PM concentration $D_R$ of the downstream side.

Therefore, although it is determined whether the emitted amount of PM in a period of allowing PM to spontaneously adhere to the PM sensor on a downstream side of the DPF is at least a predetermined amount (refer to Step S25 in FIG. 9), and judgment of DPF failure is performed only in a case of the emitted amount of PM being at least the predetermined amount in the above first embodiment, in the present embodiment, judgment of DPF failure can be performed irrespective of the emitted amount of PM.

In addition, according to the present embodiment, the PM collection rate X of the DPF is calculated based on the PM concentration $D_F$ on the upstream side of the DPF and the PM concentration $D_R$ on the downstream side of the DPF, and DPF failure is determined according to this PM collection rate X. It is thereby possible to further improve the judgment accuracy for failure.

In the present embodiment, the means related to the execution of Step S52 in FIG. 24 configure an upstream concentration detection means, the means related to the execution of Step S51 in FIG. 24 configure a downstream-side concentration calculating means, the means related to the execution of Step S53 in FIG. 24 configure a collection rate calculating means, and the means related to the execution of Steps S51 to S56 in FIG. 24 configure a failure judgment means.

Fourth Embodiment

A failure detection device for an exhaust gas purification filter according to a fourth embodiment differs from the third embodiment in the configuration of an ECU 5D and in the aspect of including a PM sensor 91D that detects PM on an upstream side of the DPF 3, in addition to the PM sensor 11 that detects PM on a downstream side of the DPF 3.

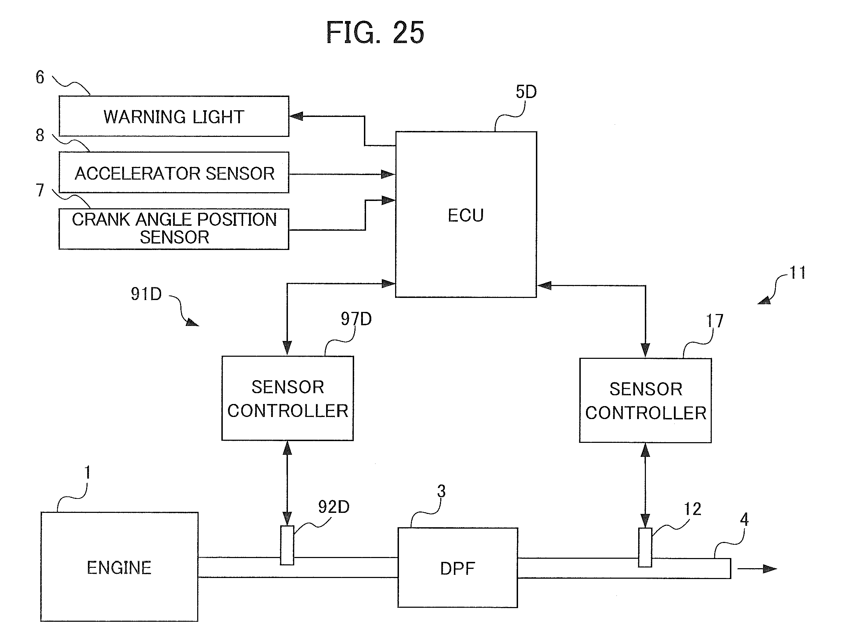

FIG. 25 is an illustration showing configurations of the engine and control device thereof, including the failure detection device for the exhaust gas purification filter according to the present embodiment.

In the third embodiment, the PM concentration $D_F$ on the upstream side of the DPF 3 calculated based on the operating state of the engine is used upon calculating the PM collection rate X of the DPF 3. In the present embodiment, the PM concentration on the upstream side of the DPF 3 is calculated based on the output of the PM sensor 91D provided on the upstream side of the DPF 3.

The PM sensor 91D includes a sensor element 92D provided inside the exhaust pipe 4 on an upstream side of the DPF, and a sensor controller 97D that is connected to the ECU 5D and controls this sensor element 92D. The configurations of this sensor element 92D and sensor controller 97D are identical to the configurations of the sensor element 12 and sensor controller 17 of the first embodiment, and thus detailed explanations thereof will be omitted. It should be noted that, in the present embodiment, in order to clearly distinguish between the two PM sensors, the PM sensor 91D on the upstream side of the DPF will be called the upstream-side PM sensor 91D and the PM sensor 11 on the downstream side of the DPF will be called the down-stream side PM sensor 11.

As described in detail later, the two of the upstream-side PM sensor 91D and the downstream-side PM sensor 11 are used concurrently in the DPF failure detection processing. However, the PM concentration of the exhaust gas differs greatly between the downstream side of the DPF 3 on which the down-stream PM sensor 11 is provided and the upstream side of the DPF 3 on which the upstream-side PM sensor 91D is provided. Therefore, it is preferably configured so that operational requirements of these two PM sensors 11 and 91D are almost the same, by tightening the flow of exhaust gas flowing into the sensor element 92D to decrease the amount of PM per unit time adhering to the sensor element 92D. In addition, in order to tighten the flow of exhaust gas, it has been considered to alter the shape of a protective cover and restrict the exhaust gas inlet flowpath.

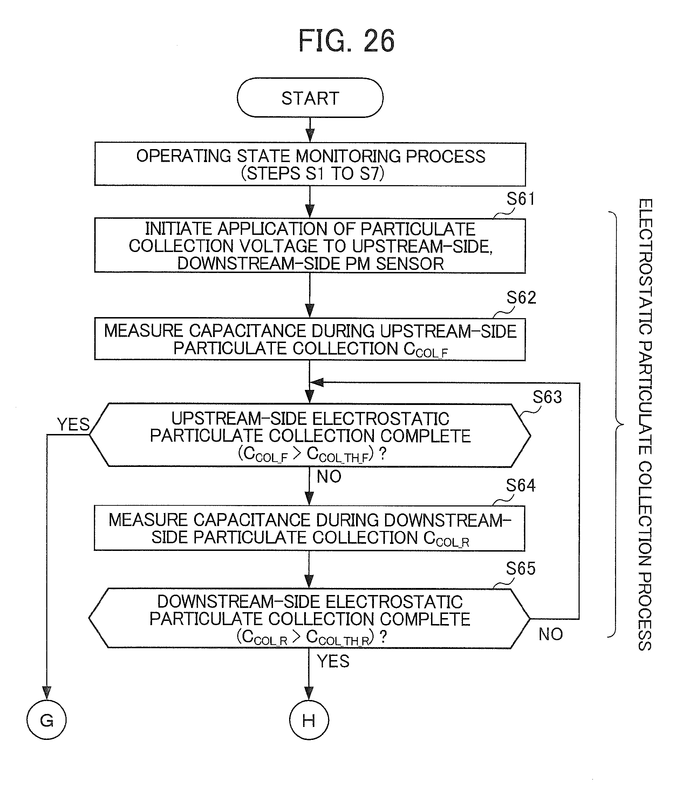

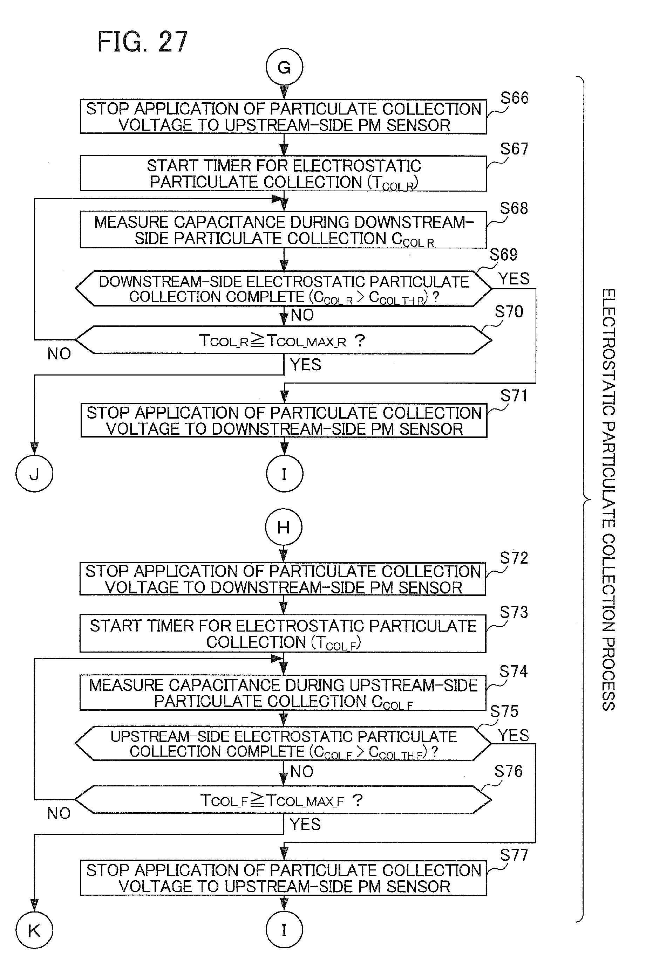

FIGS. 26 to 28 are flowcharts showing sequences of DPF failure detection processing.

Similarly to the DPF failure detection processing of the third embodiment, this DPF failure detection processing is divided into the four processes of an operating state monitoring process (Steps S1 to S7), an electrostatic particulate collection process (Steps S61 to S77), a measurement process (Steps S81 to S83), and a failure judgment process (Steps S91 to S96). It should be noted that, since the operating state monitoring process is the same as in the DPF failure detection processing of the third embodiment, a detailed explanation and illustrations thereof will be omitted.

The electrostatic particulate collection process (Steps S61 to S77) will be explained.

In Step S61, the application of particulate collection voltage to the respective particulate collection electrodes of the upstream-side PM sensor and the downstream-side PM sensor is initiated. In other words, electrostatic particulate collection is initiated.

In Step S62, the capacitance of the particulate collection portion of the upstream-side PM sensor is measured while particulate collection voltage remains applied to the upstream-side PM sensor, by applying the measurement voltage to the measurement electrodes, and this measured value is recorded as a capacitance during upstream-side particulate collection $C_{COL\_F}$.

In Step S63, it is determined whether a predetermined condition set in order to determine the completion of upstream-side PM sensor electrostatic particulate collection has been satisfied. In the present embodiment, the capacitance during upstream-side particulate collection $C_{COL\_F}$ thus measured exceeding a predetermined completion judgment value $C_{COL\_TH\_F}$ is defined as the condition determining the completion of electrostatic particulate collection. In a case of this determination being YES, i.e. in a case of the capacitance during upstream-side particulate collection $C_{COL\_F}$

being greater than the completion judgment value $C_{COL\_TH\_F}$, Step S66 is advanced to. In a case of this determination being NO, i.e. in a case of the capacitance during upstream-side particulate collection $C_{COL\_F}$ being no more than the completion judgment value $C_{COL\_TH\_F}$, Step S64 is advanced to.

In Step S64, the capacitance of the particulate collection portion of the downstream-side PM sensor is measured while particulate collection voltage remains applied to the downstream-side PM sensor, by applying the measurement voltage to the measurement electrodes, and this measured value is recorded as a capacitance during downstream-side particulate collection $C_{COL\_R}$.

In Step S65, it is determined whether a predetermined condition set in order to determine the completion of downstream-side PM sensor electrostatic particulate collection has been satisfied. In the present embodiment, the matter of the capacitance during downstream-side particulate collection $C_{COL\_R}$ thus measured exceeding a predetermined completion judgment value $C_{COL\_TH\_R}$ is defined as the condition determining the completion of electrostatic particulate collection. In a case of this determination being YES, i.e. in a case of the capacitance during downstream-side particulate collection $C_{COL\_R}$ being greater than the completion judgment value $C_{COL-TH\_R}$. Step S72 is advanced to. In a case of this determination being NO, i.e. in a case of the capacitance during downstream-side particulate collection $C_{COL\_R}$ being no more than the completion judgment value $C_{COL\_TH-R}$, Step S62 is advanced to, and the particulate collection voltage continues to be applied until either the capacitance during upstream-side particulate collection $C_{COL\_F}$ or the capacitance during downstream-side particulate collection $C_{COL\_R}$ exceeds the respective completion judgment value.

In Step S66, the application of the particulate collection voltage to the particulate collection electrodes of the upstream-side PM sensor is stopped in response to the aforementioned condition for determining the completion of electrostatic particulate collection of the upstream-side PM sensor being satisfied in the aforementioned Step S63.

In Step S67, a timer for electrostatic particulate collection is started, and measurement of an electrostatic particulate collection time $T_{COL\_R}$, indicating a time for which electrostatic particulate collection of the downstream-side PM sensor has been performed in excess after completing electrostatic particulate collection of the upstream-side PM sensor, is initiated.

In Step S68, the capacitance of the particulate collection portion of the downstream-side PM sensor is measured by applying measurement voltage to the measurement electrodes of the downstream-side PM sensor again, and this measured value is recorded as a capacitance during downstream-side particulate collection $C_{COL\_R}$.

In Step S69, it is determined whether the capacitance during downstream-side particulate collection $C_{CCL\_R}$ has exceeded the aforementioned completion judgment value $C_{COL\_TH\_R}$. In a case of this determination being YES, i.e. in a case of the capacitance during downstream-side particulate collection $C_{COL\_R}$ being greater than the completion judgment value $C_{COL-TH-R}$, Step S71 is advanced to, application of the particulate collection voltage to the particulate collection electrodes of the downstream-side PM sensor is stopped, and then Step S81 is advanced to. In a case of this determination being NO, i.e. in a case of the capacitance during downstream-side particulate collection $C_{COL\_R}$, being no more than the completion judgment value $C_{COL\_TH-R}$, Step S70 is advanced to.

In Step S70, it is determined whether the electrostatic particulate collection time $T_{COL\_R}$ has reached a predetermined maximum time $T_{COL\_MAX\_R}$. In a case of this determination being YES, i.e. in a case of the capacitance during downstream-side particulate collection $C_{COL\_R}$ not having exceeded the completion judgment value $C_{COL\_TH\_R}$ after completing electrostatic particulate collection of the upstream-side PM sensor, despite electrostatic particulate collection of the downstream-side PM sensor having continued over the maximum time $T_{COL\_MAX\_R}$, it is determined that almost no PM is being emitted to downstream of the DPF and judged that the DPF has not failed, and then Step S95 is advanced to. In a case of this determination being NO, Step S68 is advanced to.

In Step S72, the application of the particulate collection voltage to the particulate collection electrodes of the downstream-side PM sensor is stopped in response to the aforementioned condition for determining the completion of electrostatic particulate collection of the downstream-side PM sensor being satisfied in the aforementioned Step S65.

In Step S73, a timer for electrostatic particulate collection is started, and measurement of an electrostatic particulate collection time $T_{COL\_F}$, indicating a time for which electrostatic particulate collection of the upstream-side PM sensor has been performed in excess after completing electrostatic particulate collection of the downstream-side PM sensor, is initiated.

In Step S74, the capacitance of the particulate collection portion of the upstream-side PM sensor is measured by applying measurement voltage to the measurement electrodes of the upstream-side PM sensor again, and this measured value is recorded as a capacitance during upstream-side particulate collection $C_{COL\_F}$.

In Step S75, it is determined whether the capacitance during upstream-side particulate collection $C_{COL\_F}$ has exceeded the aforementioned completion judgment value $C_{COL\_TH\_F}$. In a case of this determination being YES, i.e. in a case of the capacitance during upstream-side particulate collection $C_{COL\_F}$ being greater than the completion judgment value $C_{COL\_TH\_F}$, Step S77 is advanced to, application of the particulate collection voltage to the particulate collection electrodes of the upstream-side PM sensor is stopped, and then Step S81 is advanced to. In a case of this determination being NO, i.e. in a case of the capacitance during upstream-side particulate collection $C_{COL\_F}$ being no more than the completion judgment value $C_{COL\_TH-F}$, Step S76 is advanced to.

In Step S76, it is determined whether the electrostatic particulate collection time $T_{COL\_F}$ has reached a predetermined maximum time $T_{COL\_MAX\_F}$. In a case of this determination being YES, i.e. in a case of the capacitance during upstream-side particulate collection $C_{COL\_F}$ not having exceeded the completion judgment value $C_{COL\_TH\_F}$ after completing electrostatic particulate collection of the downstream-side PM sensor, despite electrostatic particulate collection of the upstream-side PM sensor having continued over the maximum time $T_{COL\_MAX\_F}$. since this means that a relatively large amount of PM is flowing out to the downstream side of the DPF while the amount of PM detected on the upstream side of the DPF is small, it is judged that the DPF has failed, and then Step S96 is advanced to. In a case of this determination being NO, Step S74 is advanced to.

The measurement process (Step S81 to S83) will be explained.

In Step S81, a timer for spontaneous adherence is started, and measurement of the spontaneous adherence time $T_{AFTER}$ indicating the time for which PM is allowed to spontaneously adhere to the upstream-side PM sensor and the downstream-side PM sensor is initiated.

In Step S82, it is determined whether the spontaneous adherence time $T_{AFTER}$ has reached a predetermined maximum time $T_{MEAS}$. In a case of this determination being YES, i.e. in a case of the maximum time $T_{MEAS}$ having elapsed since initiating the spontaneous adherence of PM, Step S83 is advanced to. On the other hand, in a case of this determination being NO, Step S82 is executed again to wait for the maximum time $T_{MEAS}$ to elapse.

In Step S83, the capacitances of the respective particulate collection portions are measured by applying measurement voltage to the measurement electrodes of the upstream-side PM sensor and the downstream-side PM sensor, and these measured values are recorded as the upstream-side post spontaneous adherence capacitance $C_{PM\_F}$ and the downstream-side post spontaneous adherence capacitance $C_{PM\_R}$. Also at the same time, the time derivative values of the post spontaneous adherence capacitances $C_{PM\_F}$ and $C_{PM\_R}$ are respectively calculated, and these measured values are recorded as the derivative value $dC_{PM\_F}/dt$ of upstream-side capacitance and the derivative value $dC_{PM\_R}/dt$ of downstream-side capacitance.

The failure judgment process (Steps S91 to S96) will be explained.

In Step S91, the PM concentration $D_R$ of the exhaust on a downstream side of the DPF is calculated based on the downstream-side post spontaneous adherence capacitance $C_{PM\_R}$ and derivative value $dC_{PM\_R}/dt$ thereof thus measured in the above Step S43, and the engine revolution speed N and generated torque T at this time.

In Step S92, the PM concentration $D_R$ of the exhaust gas on an upstream side of the DPF is calculated based on the upstream-side post spontaneous adherence capacitance $C_{PM\_F}$ and derivative value $dC_{PM\_F}/dt$ thereof thus measured in the above step, and the engine revolution speed N and generated torque T at this time.

In Step S93, the PM collection rate X indicating a proportion of particulate matter collected in the DPF is calculated based on the PM concentration $D_F$ of the exhaust on an upstream side of the DPF and the PM concentration $D_R$ of the exhaust on a downstream side of the DPF.

In Step S94, it is determined whether the PM collection rate X thus calculated is larger than a predetermined failure judgment value $X_{TH}$. In a case of this determination being YES, it is judged that the DPF is normal and Step S95 is advanced to, and this processing is ended after setting the failure judgment flag to "0". In a case of this determination being NO, it is judged that the DPF is in a failed state and Step S96 is advanced to, and this processing is ended after setting the failure judgment flag to "1".

Effects similar to the third embodiment can be exerted according to the present embodiment.

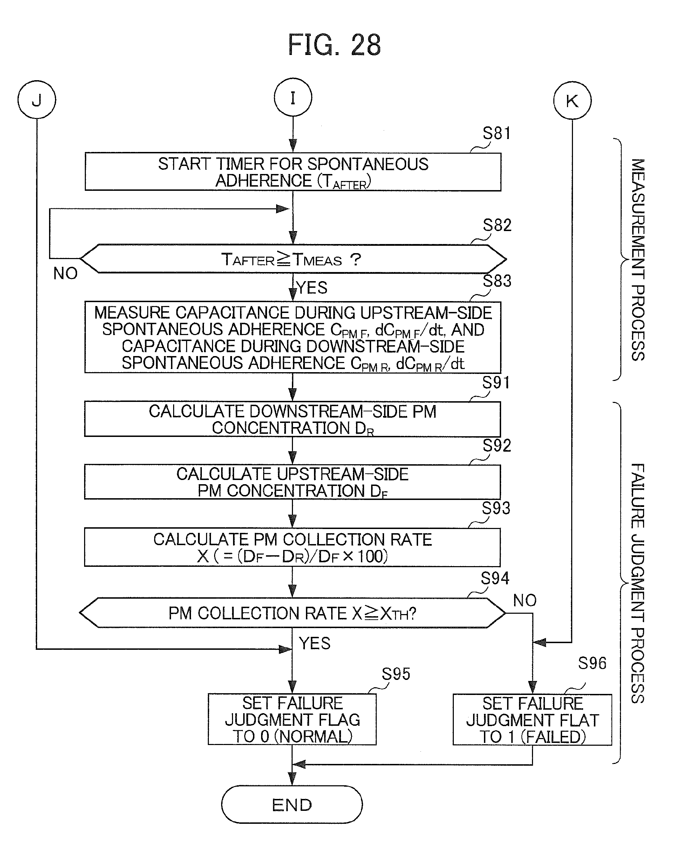

In addition, in the present embodiment, the means related to the PM sensor 91D and execution of Step S92 in FIG. 28 configure an upstream concentration detection means, the means related to the execution of Step S91 in FIG. 28 configure a downstream-side concentration calculating means, the means related to the execution of Step S93 in FIG. 28 configure a collection rate calculating means, and the means related to the execution of Steps S91 to S96 in FIG. 28 configure a failure judgment means.

Fifth Embodiment

A failure detection device for an exhaust gas purification filter according to a fifth embodiment differs from the third embodiment in the configuration of an ECU and in the aspect of including a PM sensor that detects PM on an upstream side of the DPF, in addition to the PM sensor that detects PM on a downstream side of the DPF.

With the third embodiment, the PM concentration $D_F$ on the upstream side of the DPF calculated based on the operating state of the engine is used upon calculating the PM collection rate X of the DPF. In the present embodiment, the PM collection rate X of the DPF is calculated based on the PM concentration $D_F$ obtained from the output of the PM sensor provided on the upstream side of the DPF.

The PM concentration of the exhaust gas differs greatly between the upstream side and downstream side of the DPF. As a result, it is preferable to use a discharge-type sensor capable of measuring high concentration or an electrostatic particle collection-type sensor compatible with high concentration as the PM sensor detecting PM on the upstream side of the DPF.

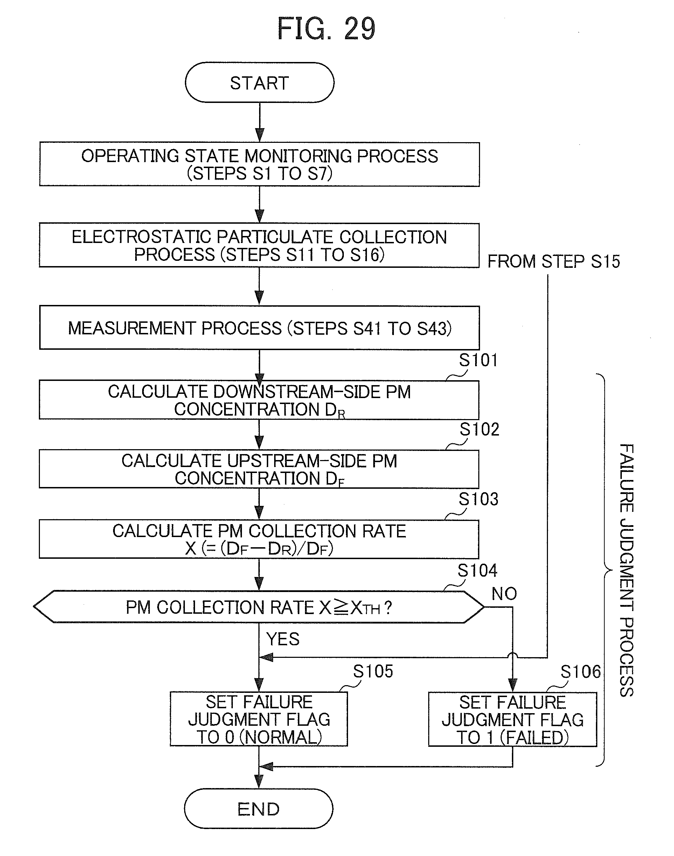

FIG. 29 is a flowchart showing a sequence of DPF failure detection processing.

Similarly to the DPF failure detection processing of the third embodiment, this DPF failure detection processing is divided into the four processes of an operating state monitoring process (Steps S1 to S7), an electrostatic particulate collection process (Steps S11 to S16), a measurement process (Steps S41 to S43), and a failure judgment process (Steps S101 to S106). It should be noted that, since the operating state monitoring process, electrostatic particulate collection process and measurement process are the same as in the DPF failure detection processing of the third embodiment, detailed explanations and illustrations thereof will be omitted.

The failure judgment process (Steps S101 to S106) will be explained.

In Step S101, the PM concentration $D_R$ of the exhaust on a downstream side of the DPF is calculated based on the post spontaneous adherence capacitance $C_{PM}$ and derivative value $dC_{PM}/dt$ thereof measured in the measurement process, and the engine revolution speed N and generated torque T at this time.

In Step S102, the PM concentration $D_F$ of the exhaust gas on the upstream side of the DPF is calculated based on the output of the upstream-side PM sensor.

In Step S103, the PM collection rate X indicating a proportion of particulate matter collected in the DPF is calculated based on the PM concentration $D_F$ of the exhaust on an upstream side of the DPF and the PM concentration $D_R$ of the exhaust on a downstream side of the DPF.

In Step S104, it is determined whether the PM collection rate X thus calculated is larger than a predetermined failure judgment value $X_{TH}$. In a case of this determination being YES, it is judged that the DPF is normal and Step S105 is advanced to, and this processing is ended after setting the failure judgment flag to "0". In a case of this determination being NO, it is judged that the DPF is in a failed state and Step S106 is advanced to, and this processing is ended after setting the failure judgment flag to "1".

Effects similar to the third embodiment can be exerted according to the present embodiment.

In addition, in the present embodiment, the means related to the execution of Step S102 in FIG. 29 configure an upstream concentration detection means, the means related to the execution of Step S101 in FIG. 29 configure a downstream-side concentration calculating means, the means related to the execution of Step S103 in FIG. 29 configure a collection rate calculating means, and the means related to the execution of Steps S101 to S106 in FIG. 29 configure a failure judgment means.

Sixth Embodiment

In a failure detection device for an exhaust gas purification filter according to a sixth embodiment, the configuration of the ECU differs from the first embodiment. More specifically, in the present embodiment, execution of DPF failure detection processing is determined in concert with the execution of DPF regeneration operation to combustively remove PM collected in the DPF.

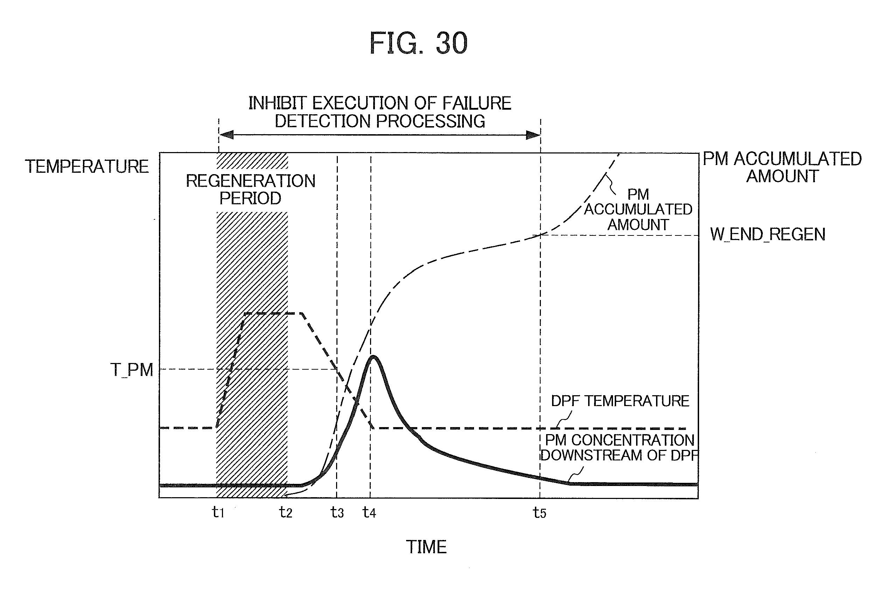

FIG. 30 is a graph showing characteristic behavior of the PM concentration in the exhaust downstream of the DPF after executing DPF regeneration operation.

In FIG. 30, the temperature of the DPF indicated by the dotted line shows the following such behavior.

First, when DPF regeneration operation is initiated at time t1, the temperature of the DPF suddenly rises, and combustion of PM collected in the DPF initiates in response to a PM combustion temperature T_PM having been exceeded. At time t2, DPF regeneration operation is ended in response to the combustion of the collected PM ending. From this time t2 and onwards, the temperature of the DPF starts to gradually decline. At time t3, the temperature of the DPF falls below the PM combustion temperature T_PM, and then from time t4 and onwards, stabilizes in temperature during normal driving.

In contrast, in FIG. 30, the PM concentration of the exhaust gas downstream of the DPF indicated by the solid line shows the following such behavior.

First, between times t1 and t2, PM collected in the DPF and PM having flowed into the DPF are combustively removed by executing the DPF regeneration operation; therefore, the PM concentration of the exhaust gas downstream of the DPF is low. In addition, from after the DPF regeneration operation is ended at time t2 until many pores of the DPF are plugged by PM having newly flowed into the DPF at time t5, the PM collection performance of the DPF temporarily declines; therefore, a state is entered in which PM tends to pass through the DPF. As a result, the PM concentration downstream of the DPF temporarily rises between times t2 and t5, as shown in FIG. 30.

More specifically, immediately following time t2, the PM collection performance of the DPF is in a declined state accompanying the end of the DPF regeneration operation; however, since the temperature of the DPF is higher than the PM combustion temperature due to preheating in the DPF regeneration operation, the PM newly flowing thereinto will combust in the DPF, and the amount discharged to downstream thereof will be small.

However, the temperature of the DPF gradually declines, and from the time when it falls below the PM combustion temperature at time t3, PM not combustively broken down by the preheating of the DPF starts to pass through the DPF, and the PM concentration in the exhaust downstream of the DPF rises. Then, by the time the temperature of the DPF stabilizes at no higher than the PM combustion temperature at time t4, the PM concentration of the exhaust downstream of the DPF is a maximum. Thereafter, the collection performance of the DPF recovers due to the pores of the DPF being eventually filled up by PM newly flowing thereinto, and the PM concentration downstream of the DPF begins to decline. Then, from time t5 and onwards, the PM concentration downstream of the DPF stabilizes due to many pores of the DPF being filled with PM.

In the present embodiment, periods not suited to judging DPF failure with the PM sensor provided on the downstream side of the DPF, such as during the execution of the DPF regeneration operation (time t1 to t2), the period (times t2 to t5) in which the DPF collection performance temporarily declines immediately following the DPF regeneration operation and the period (times t2 to t3) in which the temperature of the DPF exceeds the PM combustion temperature T_PM immediately following the DPF regeneration operation, are defined as inhibited periods, and execution of the DPF failure detection processing is inhibited in these inhibited periods.

Among these three inhibited periods, the period in which the DPF collection performance temporarily declines immediately following completion of the DPF regeneration operation can be more specifically defined as follows.

After the completion of the DPF regeneration operation, the DPF collection performance recovers due to the PM newly flowing into the DPF being collected. Therefore, in the present embodiment, after the completion of the DPF regeneration operation, the accumulated amount CNT_PM of PM flowing into the DPF is successively calculated, as shown by the dashed-dotted line in FIG. 30. Then, the period from after completing the DPF regeneration operation until the PM accumulated amount CNT_PM reaches a predetermined judgment amount W_END_REGEN is defined as an inhibited period.

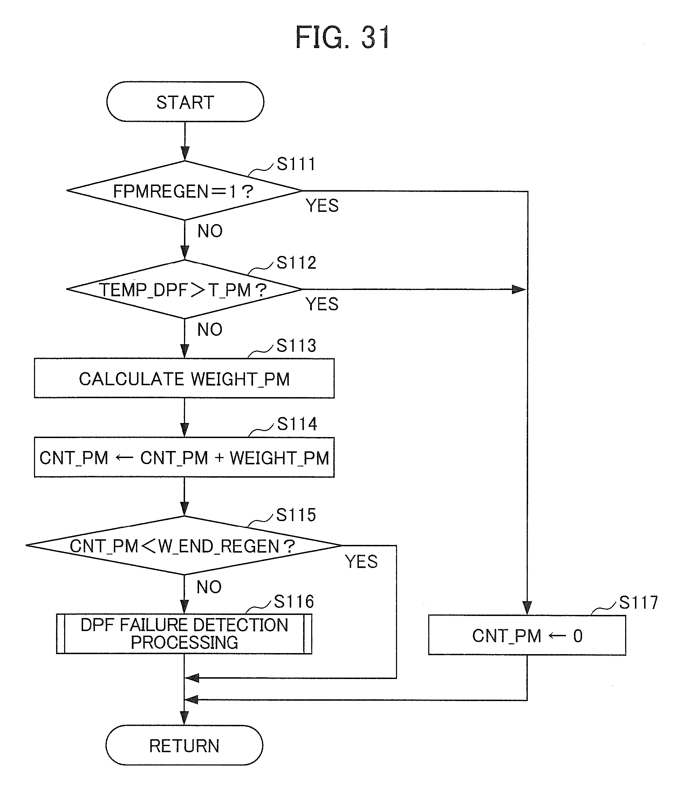

FIG. 31 is a flowchart showing a sequence of determining execution of the DPF failure detection processing based on the above such concept.

In Step S111, it is determined whether a DPF regeneration operation execution flag FPMREGEN is "1". This DPF regeneration operation execution flag FPMREGEN is a flag that commands the execution of the DPF regeneration operation. While "1" is set in this DPF regeneration operation execution flag FPMREGEN, the DPF regeneration is executed according to a command from the ECU. In a case of the determination in Step S111 being YES, Step S117 is advanced to, and then, in Step S117, the PM accumulated amount CNT_PM flowing into the DPF is reset to the value 0, and the present processing is ended without executing DPF failure detection processing. On the other hand, in a case of the determination in Step S111 being NO, Step S112 is advanced to.

In Step S112, it is determined whether the DPF temperature TEMP_DPF is higher than the PM combustion temperature T_PM. In a case of the determination in Step S112 being YES, Step S117 is advanced to, and then in Step S117, the PM accumulated amount CNT_PM is reset to the value 0, and the present processing is ended without executing the DPF failure detection processing. On the other hand, in a case of the determination in Step S112 being NO, Step S113 is advanced to. It should be noted that, this DPF temperature TEMP_DPF is estimated based on the output of the exhaust temperature sensor, which detects the temperature of the exhaust gas downstream of the DPF.

It should be noted that the DPF temperature TEMP_DPF may be estimated based on the output of an exhaust gas temperature sensor that detects the temperature of exhaust gas upstream of the DPF. Alternatively, the output of a DPF temperature sensor that directly detects the DPF temperature may be used.

In Step S113, the amount WEIGHT_PM of PM discharged from the engine during the present control cycle is calculated, and Step S114 is advanced to. This PM emission amount WEIGHT_PM is calculated by searching a predetermined map based on the engine revolution speed N and fuel injection amount W, for example.

In Step S114, the PM accumulated amount CNT_PM is updated by adding the PM emission amount WEIGHT_PM thus calculated, and Step S115 is advanced to.

In Step S115, it is determined whether the PM accumulated amount CNT_PM is less than the judgment amount W_END_REGEN. In a case of this determination in Step S115 being YES, it is determined that the DPF collection performance has not recovered from the temporarily declined state after the DPF regeneration operation, and the present processing is ended to inhibit execution of the DPF failure detection processing. On the other hand, in a case of the determination in Step S115 being NO, it is determined that a PM amount is discharged of an extent indicating recovery from the state in which the DPF collection performance temporarily declined after the DPF regeneration operation, and then DPF failure detection processing is executed.

By configuring in the above way, the execution of DPF failure detection processing is inhibited in the three inhibited periods of: during DPF regeneration operation, the period from after ending DPF regeneration operation until the PM accumulated amount CNT_PM reaches the judgment amount W_END_REGEN, and the period from after ending DPF regeneration operation until the DPF temperature TEMP_DPF exceeds the PM combustion temperature T_PM.

In addition to effects similar to the first embodiment, the following effects are exerted according to the present embodiment.

After executing the DPF regeneration operation, DPF failure judgment is inhibited until the aforementioned inhibited periods have passed. It is thereby possible to prevent mistakenly judging that the DPF has failed according to the PM emitted downstream of the DPF until the PM fills the pores after the DPF regeneration operation. In other words, it is possible to further improve the failure judgment accuracy.

After the DPF regeneration operation ends, the execution of failure detection processing is inhibited in a case of the DPF temperature TEMP_DPF being at least the PM combustion temperature T_PM. It is thereby possible to prevent misjudgment and to further improve the failure judgment accuracy.

It should be noted that, although the PM accumulated amount CNT_PM is estimated based on the operating state of the engine such as the engine revolution speed N and fuel injection amount W in the present embodiment, it is not limited thereto. For example, a PM sensor may be provided on the upstream side of the DPF as well, and the PM accumulated amount CNT_PM may be estimated based on the output of this PM sensor. Alternatively, a differential pressure sensor that detects the pressure differential between the upstream side and downstream side of the DPF may be provided, and the PM accumulated amount CNT_PM may be estimated based on the output of this differential pressure sensor.

In addition, although the period from after ending the DPF regeneration operation until the accumulated amount CNT_PM of PM flowing into the DPF reaches the predetermined judgment amount W_END_REGEN is defined as one of the inhibited periods, and the execution of DPF failure detection processing is inhibited in the present embodiment, it is not limited thereto.

For example, the amount of PM collected in the DPF, i.e. PM collected amount, may be estimated, and the period from after ending the DPF regeneration operation until this PM collected amount exceeds a predetermined amount may be defined as an inhibited period. In this case, similarly to the aforementioned PM accumulated amount CNT_PM, the PM collected amount can be estimated based on the operating state of the engine, estimated based on the output of a PM sensor provided on the upstream side of the DPF, and estimated based on the output of a differential pressure sensor detecting the pressure differential between the upstream side and downstream side of the DPF.

In addition, the PM collection rate, indicating the proportion of PM collected in the DPF among the PM flowing into the DPF, may be estimated, and the period from after ending DPF regeneration operation until this PM collection rate exceeds a predetermined value may be defined as an inhibited period. In this case, similarly to the aforementioned PM accumulated amount CNT_PM, the PM collection rate can be estimated based on the operating state of the engine, estimated based on the output of a PM sensor provided on the upstream side of the DPF, and estimated based on the output of a differential pressure sensor detecting the pressure differential between the upstream side and downstream side of the DPF.

In addition, for example, the time elapsed since ending the DPF regeneration operation may be measured, and the period until this elapsed time exceeds a predetermined time may be defined as an inhibited period.

In the present embodiment, the ECU configures a regeneration means, accumulated amount calculating means, collected amount estimating means, collection rate estimating means and timing means, and the ECU and exhaust gas temperature sensor configure a filter temperature detection means.

Seventh Embodiment

In a failure detection device of an exhaust gas purification filter according to a seventh embodiment, the configuration of the ECU differs from the first embodiment. In the DPF failure detection processing of the present embodiment, the sensor element of the PM sensor is maintained at a high sensitivity range, and DPF failure is judged by further using the acceleration time of the engine.

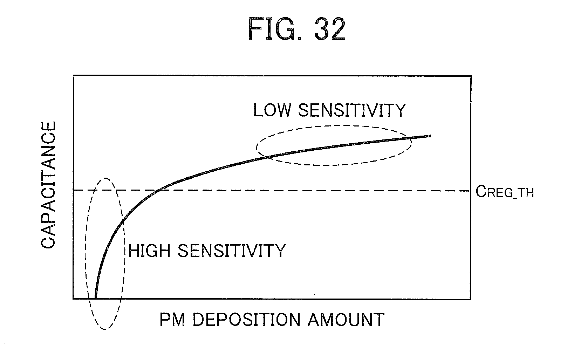

FIG. 32 is a graph showing a relationship between an amount of PM deposited in the sensor element and the capacitance of this sensor element.

As shown in FIG. 32, the characteristic of the change in capacitance with PM deposition amount differs between a region in which the PM deposition amount is small and a region in which it is large. More specifically, in the region in which the PM deposition amount is small (region in which capacitance is low), the rate of change in capacitance relative to the PM deposition amount becomes larger than in the region in which the PM deposition amount is large (region in which capacitance is high). This means that the region in which capacitance is low has higher sensitivity of the sensor element than the region in which it is high.

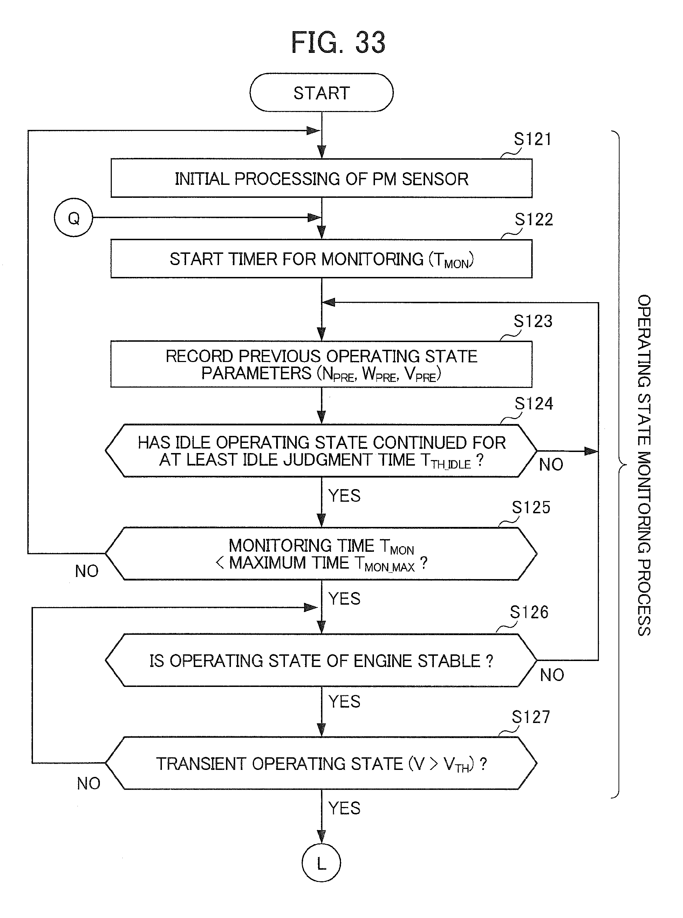

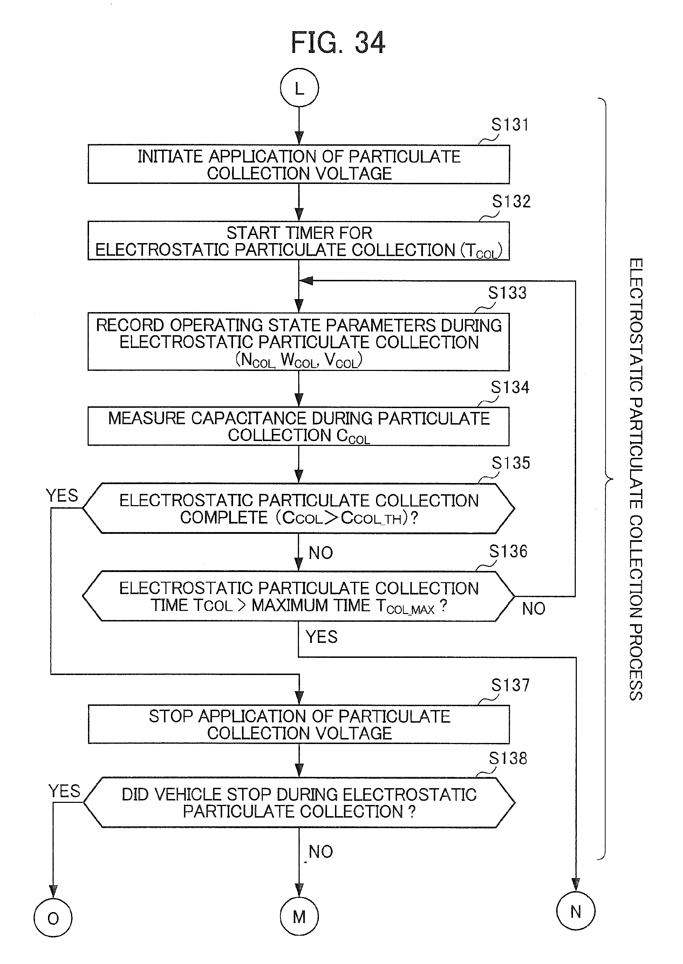

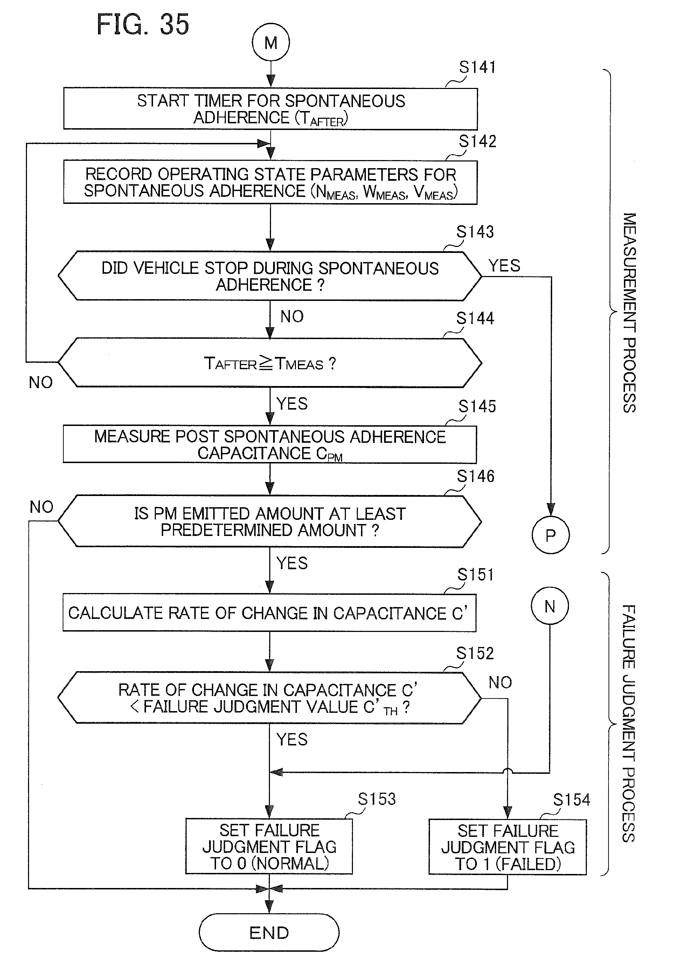

Therefore, in the present embodiment, as described in detail later while referring to FIGS. 33 to 36, a threshold value $C_{REG\_TH}$ is set in the region in which the rate of change in capacitance relative to PM deposition amount is less than the predetermined value, i.e. within a low sensitivity region, and in a case of the capacitance of the sensor element having exceeded this threshold value $C_{REG\_TH}$, the sensor element is maintained in the high sensitivity region by regenerating the sensor element.

FIGS. 33 to 36 are flowcharts showing sequences of DPF failure detection processing of the present embodiment. This DPF failure detection processing is repeatedly executed by the ECU after startup of the engine.

The DPF failure detection processing of the present embodiment is divided into the five processes of a state monitoring process (Steps S121 to S127), an electrostatic particulate collection process (Steps S131 to S138), a measurement process (Steps S141 to S146), a failure judgment process (Steps S151 to S154), and a sensor regeneration process (Step S161 to S163) of regenerating the sensor element.

As will be explained in detail hereinafter, while performing the electrostatic particulate collection process and measurement process, the operating state of the engine is monitored, and in a case of PM of the amount required in order to judge DPF failure with high accuracy not having been emitted such as when the vehicle is stopped, this failure detection processing is interrupted, and restarted from the state monitoring process. Upon restarting failure detection processing in this way, the sensor regeneration process is executed in order to maintain the sensor element in the high sensitivity region as described above.

It should be noted that the state monitoring process (Steps S121 to S127) is the same as the state monitoring process of the first embodiment (Steps S1 to S7), Steps S131, S132 and S134 to S137 of the electrostatic particulate collection process are respectively the same as Steps S11 to S16 of the electrostatic particulate collection process of the first embodiment, Steps S141, S142, S144, S145 and S146 are respectively the same as Steps S21 to S25 of the measurement process of the first embodiment, and the failure judgment process (Steps S151 to S154) are the same as Steps S32 to S35 of the failure judgment process of the first embodiment, and thus detailed explanations of these will be omitted.

The electrostatic particulate collection process (Steps S131 to S138) will be explained.

In Step S133, the operating state parameters (revolution speed N, fuel injection amount W, and vehicle speed V) are measured, and these measured values are recorded as operating state parameters during electrostatic particulate collection (revolution speed $N_{COL}(T)$, fuel injection amount $W_{COL}(T)$, and vehicle speed $V_{COL}(T)$).

Then, after the application of particulate collection voltage was stopped in Step S137, it is determined whether the vehicle has stopped while the particulate collection voltage was being applied based on the operating state parameters during electrostatic particulate collection thus measured in Step S138.

In a case of this determination in Step S137 being YES, i.e. in a case of the vehicle having stopped during electrostatic particulate collection, it is determined that the emitted amount of PM is insufficient to judge DPF failure with high accuracy, and the sensor regeneration process of Step S161 is advanced to in order to interrupt this failure detection processing.

On the other hand, in a case of this determination in Step S137 being NO, i.e. in a case of the vehicle not having stopped during electrostatic particulate collection, it is determined that PM of an amount required in order to judge DPF failure with high accuracy is emitted, and Step S141 is advanced to in order to continue this failure detection processing.

The measurement process (Steps S141 to S146) will be explained.

In Step S143, it is determined whether the vehicle has stopped while allowing spontaneous adherence, based on the operating state parameters during spontaneous adherence measured in Step S142.

In a case of this determination in Step S143 being YES, i.e. in a case of the vehicle having stopped while allowing spontaneous adherence, it is determined that the emitted amount of PM is insufficient to judge DPF failure with high efficiency, and the sensor regeneration process of Step S161 is advanced to in order to interrupt this failure detection processing.

On the other hand, in a case of this determination in Step S143 being NO, i.e. in a case of the vehicle not having stopped while allowing spontaneous adherence, it is determined that PM of the amount required to judge DPF failure with high accuracy has been emitted, and Step S144 is advanced to in order to continue this failure detection processing.

The sensor regeneration process (Steps S161 to S163) will be explained.

In Step S161, it is determined whether the vehicle is in a stopped state. In a case of this determination being YES, Step S162 is advanced to. On the other hand, in a case of this determination being NO, Step S161 is executed again to wait for the vehicle to stop.

In Step S162, the capacitance of the particulate collection portion is measured by applying the measurement voltage to the measurement electrodes, this measured value is recorded as the capacitance during regeneration $C_{REG}$, and Step S163 is advanced to.

In Step S163, it is determined whether the capacitance during regeneration $C_{REG}$ is larger than the threshold value $C_{REG\_TH}$ set for determining the sensitivity of the aforementioned sensor element. In a case of this determination being YES, it is determined that the sensor element is in a low sensitivity region, regeneration of the sensor element is executed in order to make the sensor element in a high sensitivity region, after which Step S122 is advanced to, and the processing restarts from the operating state monitoring process. Although the regeneration of the sensor element is performed by passing current through a heater layer to combustively remove PM deposited in the particulate collection portion herein, it is not limited thereto.

In addition to effects similar to the first embodiment, the following effects are exerted according to the present embodiment.

The sensor element is regenerated based on the measured value of the capacitance $C_{REG}$ of the sensor element having become larger than the threshold value $C_{REG\_TH}$, whereby the adhered PM is combustively removed.

In addition, this threshold value $C_{REG\_TH}$ is set within a region in which the rate of change in capacitance of the sensor element relative to the PM deposition amount is less than a predetermined value, i.e. in a region in which the sensitivity of the sensor element is low. Since it is thereby possible to normally use the sensor element in a region of good sensitivity, the failure judgment accuracy can be further improved.

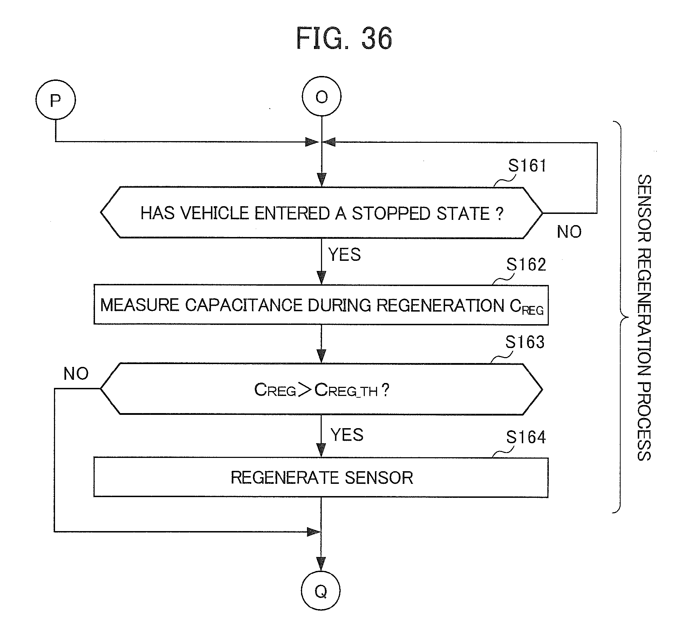

In the present embodiment, the ECU, heater layers 122 and 129, and temperature control device 15 configure a removal means. More specifically, the means related to the execution of Step S163 in FIG. 36 configure the removal means.

It should be noted that the present invention is not to be limited to the aforementioned embodiments, and various modifications thereto are possible.

For example, although the capacitance of the particulate collection portion is measured as an electrical characteristic of the sensor element in the aforementioned embodiments, it is not limited thereto. This is not limited to the capacitance of the particulate collection portion, and may be a physical quantity correlated to the PM deposition amount of the particulate collection portion.

In addition, although the PM sensor of the first embodiment including measurement electrodes separately from the particulate collection electrodes is used as the PM sensor detecting PM in the exhaust on the downstream side of the DPF in the aforementioned third to fifth embodiments, it is not limited thereto. For example, the PM sensor of the second embodiment including particulate collection electrodes that also serve as measurement electrodes may be used for the PM sensor detecting PM in the exhaust on the downstream side of the DPF.

**Claims**

1. A failure detection device for an exhaust gas purification filter including a sensor element that is provided in an exhaust channel of an internal combustion engine downstream of the exhaust gas purification filter that collects particulate matter contained in exhaust gas, and to which particulate matter contained in exhaust gas adheres, wherein the sensor element has a first electrode portion to which particulate a collection voltage for causing particulate matter contained in exhaust gas to adhere to the sensor element is applied, and a second electrode portion to which a measurement voltage for measuring an electrical characteristic of the sensor element is applied, the failure detection device comprising:

   a voltage application initiation means for initiating application of the particulate collection voltage to the first electrode;
   a first measurement means for measuring an electrical characteristic of the sensor element by applying the measurement voltage to the second electrode, after the application of the particulate collection voltage has been initiated;
   a voltage application stop means for stopping application of the particulate collection voltage to the first electrode in response to a predetermined condition being satisfied;
   a second measurement means for measuring an electrical characteristic of the sensor element by applying the measurement voltage to the second electrode after application of the particulate collection voltage has stopped; and
   a failure judgment means for judging failure of the exhaust gas purification filter based on a measured value of the second measurement means.

2. A failure detection device for an exhaust gas purification filter according to claim 1, wherein the failure judgment means judges that the exhaust gas purification filter is normal in a case of the predetermined condition not being satisfied from after initiating application of the particulate collection voltage to the first electrode until a predetermined time elapses.

3. A failure detection device for an exhaust gas purification filter according to claim 1 or 2, wherein the particulate collection voltage is higher than the measurement voltage.

4. A failure detection device for an exhaust gas purification filter including a sensor element that is provided in an exhaust channel of an internal combustion engine downstream of the exhaust gas purification filter that collects particulate matter contained in exhaust gas, and to which particulate matter contained in exhaust gas adheres, wherein the sensor element has an electrode portion to which either of a particulate collection voltage for causing particulate matter contained in exhaust gas to adhere to the sensor element, and a measurement voltage that is lower than the particulate collection voltage and is for measuring an electrical characteristic of the sensor element is selectively applied,

the failure detection device comprising:

a voltage application means for applying the particulate collection voltage to the electrode over a predetermined time;

a first measurement means for measuring the electrical characteristic of the sensor element by applying the measurement voltage to the electrode portion after the particulate collection voltage is applied;

a judgment means for judging whether a predetermined condition has been satisfied;

a second measurement means for measuring the electrical characteristic of the sensor element by applying the measurement voltage to the electrode portion, after it has been judged that the predetermined condition is satisfied; and

a failure judgment means for judging failure of the exhaust gas purification filter based on a measured value of the second measurement means.

5. A failure detection device for an exhaust gas purification filter according to claim 4, wherein application of the particulate collection voltage by the voltage application means and measurement by the first measurement means are performed again in a case of the judgment means having judged that the predetermined condition has not been satisfied.

6. A failure detection device for an exhaust gas purification filter according to claim 4 or 5, wherein the exhaust gas purification filter is judged to be normal in a case of the predetermined condition not being satisfied from after initiating application of the particulate collection voltage to the electrode portion until a predetermined time elapses.

7. A failure detection device for an exhaust gas purification filter according to any one of claims 1 to 6, further comprising a transient operating state judgment means for judging whether an operating state of the internal combustion engine is a transient operating state,

wherein the particulate collection voltage is not applied in a case of the operating state not being a transient operating state.

8. A failure detection device for an exhaust gas purification filter according to claim 1 or 4, further comprising an emission amount judgment means for judging whether an emitted amount of particulate matter within a predetermined spontaneous adherence period is less than a predetermined amount, based on the operating state of the internal combustion engine,

wherein judgment of failure of the exhaust gas purification filter is not performed by the failure judgment means in a case of the emitted amount of particulate matter within the spontaneous adherence period being judged to be less than the predetermined amount.

9. A failure detection device for an exhaust gas purification filter according to claim 1 or 4, wherein the failure judgment means judges failure of the exhaust gas purification filter based on an amount of change in a measured value of the second measurement means over a predetermined spontaneous adherence period.

10. A failure detection device for an exhaust purification filter according to claim 9, wherein, with a time calculated by subtracting a time for which the internal combustion engine is operated in an operating state with an emitted amount of particulate matter less than a predetermined amount from the spontaneous adherence period defined as an effective emission time,

the failure judgment means judges that the exhaust gas purification filter is normal in a case of a rate of change in the measured value of the second measurement means over the effective emission time being less than a predetermined judgment value.

11. A failure detection device for an exhaust gas purification filter according to claim 1 or 4, wherein the predetermined condition includes the measured value of the first measurement means or a parameter calculated based on the measured value exceeding a predetermined threshold value.

12. A failure detection device for an exhaust gas purification filter according to any one of claims 1 to 7 and 11, further comprising:

an upstream-concentration detection means for detecting or estimating a concentration of particulate matter in the exhaust channel on an upstream side of the exhaust gas purification filter; and

a downstream-side concentration calculating means for calculating a concentration of particulate matter on a downstream side of the exhaust gas purification filter, based on the measured value of the second measurement means,
wherein the failure judgment means judges failure of the exhaust gas purification filter based on the concentration of particulate matter on the upstream side of the exhaust gas particulate filter and the concentration of particulate matter on the downstream side of the exhaust gas particulate filter.

13. A failure detection device for an exhaust gas particulate filter according to claim 12, further comprising a collection rate calculating means for calculating a proportion of particulate matter that is collected in the exhaust gas purification filter, based on the concentration of particulate matter on the upstream side of the exhaust gas particulate filter and the concentration of particulate matter on the downstream side of the exhaust gas particulate filter,
wherein the failure judgment means judges that the exhaust gas purification filter is normal in a case of the proportion of particulate matter that is collected in the exhaust gas particulate filter being larger than a predetermined value.

14. A failure detection device for an exhaust gas purification filter according to any one of claims 1 to 13, further comprising a regeneration means for combustively removing particulate matter collected in the exhaust gas purification filter, wherein judgment of failure by the failure judgment means is inhibited after combustive removal of particulate matter by the regeneration means ends until a predetermined inhibited period has elapsed.

15. A failure detection device for an exhaust gas purification filter according to claim 14, further comprising an accumulated amount calculating means for calculating an accumulated amount of particulate matter flowed into the exhaust gas purification filter,
wherein the inhibited period is a period from after combustive removal of particulate matter by the regeneration means ends until the accumulated amount exceeds a predetermined amount.

16. A failure detection device for an exhaust gas purification filter according to claim 14, further comprising a collected amount estimating means for estimating an amount of particulate matter collected in the exhaust gas purification filter, wherein the inhibited period is a period from after combustive removal of particulate matter by the regeneration means ends until the amount of particulate matter collected in the exhaust gas purification filter exceeds a predetermined amount.

17. A failure detection device for an exhaust gas purification filter according to claim 14, further comprising a collection rate estimating means for estimating a collection rate indicating a proportion of particulate matter that is collected among particulate matter flowing into the exhaust gas purification filter,
wherein the inhibited period is a period from after combustive removal of particulate matter by the regeneration means ends until the collection rate exceeds a predetermined value.

18. A failure detection device for an exhaust gas purification filter according to claim 14, further comprising a timing means for measuring an elapsed time since combustive removal of particulate matter by the regeneration means ended,
wherein the inhibited period is a period from after measurement of the elapsed time by the timing means is initiated until the elapsed time exceeds a predetermined time.

19. A failure detection device for an exhaust gas purification filter according to any one of claims 1 to 13, further comprising:

a regeneration means for combustively removing particulate matter collected in the exhaust gas purification filter; and
a filter temperature detection means for estimating or detecting a temperature of the exhaust gas purification filter, wherein judgment of failure by the failure judgment means is inhibited after combustive removal of particulate matter by the regeneration means ends, in a case of the temperature of the exhaust gas purification filter being at least the combustion temperature of particulate matter.

20. A failure detection device for an exhaust purification filter according to any one of claims 1 to 19, further comprising a removal means for removing particulate matter adhered to the sensor element,
wherein the removal means removes particulate matter adhered to the sensor element, based on a measured value of the electrical characteristic of the sensor element having become larger than a predetermined threshold value, and
wherein the predetermined threshold value for the measured value is set within a region in which a rate of change in the electrical characteristic of the sensor element relative to an adhered amount of particulate matter of the sensor element is less than a predetermined value.

# FIG. 1

EP 2 407 773 A1

FIG. 2

FIG. 3

## FIG. 4

## FIG. 5

# FIG. 6

# FIG. 7

```
                    START

                      │
                      ▼                           S1
   ┌─────────────────────────────────────────┐
   │      INITIAL PROCESSING OF PM SENSOR     │
   └─────────────────────────────────────────┘
                      │
                      ▼                           S2
   ┌─────────────────────────────────────────┐
   │   START TIMER FOR MONITORING (T_MON)     │
   └─────────────────────────────────────────┘
                      │
                      ▼                           S3
   ┌─────────────────────────────────────────┐
   │     RECORD PREVIOUS OPERATING STATE      │
   │   PARAMETERS (N_PRE, W_PRE, V_PRE)       │
   └─────────────────────────────────────────┘
                      │
                      ▼                           S4
   ⟨ HAS IDLE OPERATING STATE CONTINUED FOR    ⟩  NO
   ⟨ AT LEAST IDLE JUDGMENT TIME T_TH_IDLE ?   ⟩
                      │ YES
                      ▼                           S5
   ⟨       MONITORING TIME T_MON                ⟩  NO
   ⟨   < MAXIMUM TIME T_MON_MAX ?               ⟩
                      │ YES
                      ▼                           S6
   ⟨   IS OPERATING STATE OF ENGINE STABLE ?    ⟩  NO
                      │ YES
                      ▼                           S7
   ⟨   TRANSIENT OPERATING STATE (V>V_TH) ?     ⟩  NO
                      │ YES
                      ▼
                     (A)
```

OPERATING STATE MONITORING PROCESS

# FIG. 8

(A)

```
                 S11
┌──────────────────────────────┐
│     INITIATE APPLICATION OF   │
│  PARTICULATE COLLECTION VOLTAGE │
└──────────────────────────────┘
                 │
                 S12
┌──────────────────────────────┐
│         START TIMER FOR       │
│ ELECTROSTATIC PARTICULATE COLLECTION ($T_{COL}$) │
└──────────────────────────────┘
```

S11 INITIATE APPLICATION OF PARTICULATE COLLECTION VOLTAGE

S12 START TIMER FOR ELECTROSTATIC PARTICULATE COLLECTION ($T_{COL}$)

S13 MEASURE CAPACITANCE DURING PARTICULATE COLLECTION $C_{COL}$

S14 ELECTROSTATIC PARTICULATE COLLECTION COMPLETE ($C_{COL} > C_{COL\_TH}$) ? — YES / NO

S15 ELECTROSTATIC PARTICULATE COLLECTION TIME $T_{COL} >$ MAXIMUM TIME $T_{COL\_MAX}$ ? — NO / YES

S16 STOP APPLICATION OF PARTICULATE COLLECTION VOLTAGE

S21 START TIMER FOR SPONTANEOUS ADHERENCE ($T_{AFTER}$)

S22 RECORD OPERATING STATE PARAMETERS DURING SPONTANEOUS ADHERENCE ($N_{MEAS}$, $W_{MEAS}$, $V_{MEAS}$)

S23 $T_{AFTER} \geqq T_{MEAS}$ ? — NO / YES

(B)   (C)

ELECTROSTATIC PARTICULATE COLLECTION PROCESS

MEASUREMENT PROCESS

# FIG. 9

Ⓑ      Ⓒ

**S24**   MEASURE POST SPONTANEOUS ADHERENCE CAPACITANCE $C_{PM}$

**S25**   IS EMITTED AMOUNT OF PM AT LEAST PREDETERMINED AMOUNT ?
— NO
— YES

**S31**   CALCULATE IDLE OPERATING TIME $T_{IDLE}$

**S32**   CALCULATE RATE OF CHANGE IN CAPACITANCE $C'$

**S33**   RATE OF CHANGE IN CAPACITANCE $C'$ < FAILURE JUDGMENT VALUE $C'_{TH}$ ?
— NO
— YES

**S34**   SET FAILURE JUDGMENT FLAG TO 0 (NORMAL)

**S35**   SET FAILURE JUDGMENT FLAG TO 1 (FAILED)

END

MEASUREMENT PROCESS

FAILURE JUDGMENT PROCESS

FIG. 10

# FIG. 11

CAPACITANCE

$C_{PM}$

$C_{TH}$

$\Delta C$

FAILURE

NORMAL

$C_{COL}$

$C_{PM}$

ELECTROSTATIC
PARTICULATE
COLLECTION PERIOD

SPONTANEOUS
ADHERENCE PERIOD $\Delta T$

# FIG. 12

$\angle C$

CAPACITANCE

$C_{PM}$

$\angle C_{TH}$

FAILURE

$\Delta C$

NORMAL

$C_{COL}$

$C_{PM}$

ELECTROSTATIC
PARTICULATE
COLLECTION PERIOD

SPONTANEOUS
ADHERENCE PERIOD $\Delta T$

# FIG. 13

OPERATING CONDITION A

LARGE DPF DAMAGE

SMALL DPF DAMAGE

IDLE OPERATING PERIOD

OPERATING CONDITION B

LARGE DPF DAMAGE

SMALL DPF DAMAGE

IDLE OPERATING PERIOD

# FIG. 14

CAPACITANCE

OPERATING CONDITION A ———
OPERATING CONDITION B ———

LARGE DPF DAMAGE

LARGE DPF DAMAGE

$C_3$

SMALL DPF DAMAGE

SMALL DPF DAMAGE

$C_2$

$C_1$

TIME          T1

# FIG. 15

CAPACITANCE

LARGE DPF DAMAGE

OPERATING CONDITION A ———
OPERATING CONDITION B ———

SMALL DPF DAMAGE

TIME

# FIG. 16

# FIG. 17

## FIG. 18

## FIG. 19

# FIG. 20

START

S1
INITIAL PROCESSING OF PM SENSOR

S2
START TIMER FOR MONITORING ($T_{MON}$)

S3
RECORD PREVIOUS OPERATING STATE PARAMETERS ($N_{PRE}$, $W_{PRE}$, $V_{PRE}$)

S4
HAS IDLE OPERATING STATE CONTINUED FOR AT LEAST IDLE JUDGMENT TIME $T_{TH\_IDLE}$ ? — NO

YES

S5
MONITORING TIME $T_{MON}$ < MAXIMUM TIME $T_{MON\_MAX}$ ? — NO

YES

S6
IS OPERATING STATE OF ENGINE STABLE ? — NO

YES

S7
TRANSIENT OPERATING STATE ($V > V_{TH}$) ? — NO

YES

D

OPERATING STATE MONITORING PROCESS

## FIG. 21

D

START TIMER FOR
ELECTROSTATIC PARTICULATE COLLECTION ($T_{COL}$) — S11

INITIATE APPLICATION OF PARTICULATE
COLLECTION VOLTAGE / START TIMER FOR
APPLICATION TIME MEASUREMENT (T) — S12

$T \geqq T_{MAX}$ ? — S13
NO / YES

STOP APPLICATION OF PARTICULATE COLLECTION
VOLTAGE / RESET TIMER FOR
APPLICATION TIME MEASUREMENT — S14

MEASURE CAPACITANCE DURING PARTICULATE
COLLECTION ($C_{COL}$) — S15

ELECTROSTATIC PARTICULATE COLLECTION
COMPLETE ($C_{COL} > C_{COL\_TH}$) ? — S16
YES / NO

ELECTROSTATIC PARTICULATE COLLECTION
TIME $T_{COL} >$ MAXIMUM TIME $T_{COL\_MAX}$ ? — S17
YES / NO

ELECTROSTATIC PARTICULATE COLLECTION PROCESS

START SPONTANEOUS ADHERENCE TIMER ($T_{AFTER}$) — S21

RECORD OPERATING PARAMETERS DURING
SPONTANEOUS ADHERENCE ($N_{MEAS}$, $W_{MEAS}$, $V_{MEAS}$) — S22

$T_{AFTER} \geqq T_{MEAS}$ ? — S23
NO / YES

MEASUREMENT PROCESS

E

F

# FIG. 22

E

F

S24
MEASURE POST SPONTANEOUS ADHERENCE CAPACITANCE $C_{PM}$

S25
IS EMITTED AMOUNT OF PM AT LEAST PREDETERMINED AMOUNT ?

NO

YES

S31
CALCULATE IDLE OPERATING TIME $T_{IDLE}$

S32
CALCULATE RATE OF CHANGE IN CAPACITANCE $C'$

S33
RATE OF CHANGE IN CAPACITANCE $C'$ < FAILURE JUDGMENT VALUE $C'_{TH}$ ?

NO

YES

S34
SET FAILURE JUDGMENT FLAG TO 0 (NORMAL)

S35
SET FAILURE JUDGMENT FLAG TO 1 (FAILED)

END

MEASUREMENT PROCESS

FAILURE JUDGMENT PROCESS

# FIG. 23

ELECTROSTATIC
PARTICULATE COLLECTION

$\triangle C_{MAX}$

$\triangle C$

t=0

TIME

EP 2 407 773 A1

# FIG. 24

```
                    ┌─────────────┐
                    │    START    │
                    └──────┬──────┘
                           │
        ┌──────────────────▼──────────────────┐
        │  OPERATING STATE MONITORING PROCESS │
        │        (STEPS S1 TO S7)             │
        └──────────────────┬──────────────────┘
                           │
        ┌──────────────────▼──────────────────┐
        │ ELECTROSTATIC PARTICULATE COLLECTION│
        │    PROCESS (STEP S11 TO S16)        │
        └──────────────────┬──────────────────┘
```

FROM S15

S41
START TIMER FOR
SPONTANEOUS ADHERENCE ($T_{AFTER}$)

S42
$T_{AFTER} \geqq T_{MEAS}$ ?   NO

YES   S43
MEASURE CAPACITANCE DURING
SPONTANEOUS ADHERENCE $C_{PM}$, $C_{PM}/dt$

MEASUREMENT PROCESS

S51
CALCULATE DOWNSTREAM-SIDE PM
CONCENTRATION $D_R$

S52
CALCULATE UPSTREAM-SIDE PM
CONCENTRATION $D_F$

S53
CALCULATE PM COLLECTION RATE
$X \, ( = (D_F - D_R)/D_F \times 100)$

S54
PM COLLECTION RATE $X \geqq X_{TH}$ ?   NO

YES

S55
SET FAILURE
JUDGMENT FLAG
TO 0 (NORMAL)

S56
SET FAILURE
JUDGMENT FLAG
TO 1 (FAILED)

FAILURE JUDGMENT PROCESS

END

# FIG. 25

EP 2 407 773 A1

# FIG. 26

START

OPERATING STATE MONITORING PROCESS
(STEPS S1 TO S7)

S61
INITIATE APPLICATION OF PARTICULATE
COLLECTION VOLTAGE TO UPSTREAM-SIDE,
DOWNSTREAM-SIDE PM SENSOR

S62
MEASURE CAPACITANCE DURING UPSTREAM-SIDE
PARTICULATE COLLECTION $C_{COL\_F}$

S63
UPSTREAM-SIDE ELECTROSTATIC
PARTICULATE COLLECTION COMPLETE
$(C_{COL\_F} > C_{COL\_TH\_F})$ ?

YES

NO

S64
MEASURE CAPACITANCE DURING DOWNSTREAM-
SIDE PARTICULATE COLLECTION $C_{COL\_R}$

S65
DOWNSTREAM-SIDE ELECTROSTATIC
PARTICULATE COLLECTION COMPLETE
$(C_{COL\_R} > C_{COL\_TH\_R})$ ?

NO

YES

G

H

ELECTROSTATIC PARTICULATE COLLECTION PROCESS

51

## FIG. 27

(G)

STOP APPLICATION OF PARTICULATE COLLECTION VOLTAGE TO UPSTREAM-SIDE PM SENSOR — S66

START TIMER FOR ELECTROSTATIC PARTICULATE COLLECTION ($T_{COL\,R}$) — S67

MEASURE CAPACITANCE DURING DOWNSTREAM-SIDE PARTICULATE COLLECTION $C_{COL\,R}$ — S68

DOWNSTREAM-SIDE ELECTROSTATIC PARTICULATE COLLECTION COMPLETE ($C_{COL\,R} > C_{COL\,TH\,R}$) ? — S69 — YES

NO

$T_{COL\_R} \geqq T_{COL\_MAX\_R}$ ? — S70

NO

YES

STOP APPLICATION OF PARTICULATE COLLECTION VOLTAGE TO DOWNSTREAM-SIDE PM SENSOR — S71

(J)

(I)

(H)

STOP APPLICATION OF PARTICULATE COLLECTION VOLTAGE TO DOWNSTREAM-SIDE PM SENSOR — S72

START TIMER FOR ELECTROSTATIC PARTICULATE COLLECTION ($T_{COL\,F}$) — S73

MEASURE CAPACITANCE DURING UPSTREAM-SIDE PARTICULATE COLLECTION $C_{COL\,F}$ — S74

UPSTREAM-SIDE ELECTROSTATIC PARTICULATE COLLECTION COMPLETE ($C_{COL\,F} > C_{COL\,TH\,F}$) ? — S75 — YES

NO

$T_{COL\_F} \geqq T_{COL\_MAX\_F}$ ? — S76

NO

YES

STOP APPLICATION OF PARTICULATE COLLECTION VOLTAGE TO UPSTREAM-SIDE PM SENSOR — S77

(K)

(I)

ELECTROSTATIC PARTICULATE COLLECTION PROCESS

# FIG. 28

```
        J                    I                    K

                        ┌─────────────────────────┐  S81          ┐
                        │ START TIMER FOR          │              │
                        │ SPONTANEOUS              │              │
                        │ ADHERENCE (T_AFTER)      │              │
                        └─────────────────────────┘              │
                                                                 │ MEASUREMENT
                        < T_AFTER ≧ T_MEAS ? >  S82               │ PROCESS
              NO                    │YES                S83       │
                        ┌─────────────────────────┐              │
                        │ MEASURE CAPACITANCE ...  │              │
                        └─────────────────────────┘              ┘
```

$T_{AFTER} \geqq T_{MEAS}$ ?  S82

NO / YES

MEASURE CAPACITANCE DURING UPSTREAM-SIDE SPONTANEOUS ADHERENCE $C_{PM\,F}$, $dC_{PM\,F}/dt$, AND CAPACITANCE DURING DOWNSTREAM-SIDE SPONTANEOUS ADHERENCE $C_{PM\,R}$, $dC_{PM\,R}/dt$  S83

CALCULATE DOWNSTREAM-SIDE PM CONCENTRATION $D_R$  S91

CALCULATE UPSTREAM-SIDE PM CONCENTRATION $D_F$  S92

CALCULATE PM COLLECTION RATE $X\ (=(D_F-D_R)/D_F \times 100)$  S93

PM COLLECTION RATE $X \geqq X_{TH}$?  S94

NO

YES

SET FAILURE JUDGMENT FLAG TO 0 (NORMAL)  S95

SET FAILURE JUDGMENT FLAT TO 1 (FAILED)  S96

MEASUREMENT PROCESS

FAILURE JUDGMENT PROCESS

END

# FIG. 29

```
        ( START )
            │
            ▼
┌─────────────────────────────────┐
│ OPERATING STATE MONITORING      │
│ PROCESS (STEPS S1 TO S7)         │
└─────────────────────────────────┘
            │
            ▼
┌─────────────────────────────────┐
│ ELECTROSTATIC PARTICULATE        │         FROM STEP S15
│ COLLECTION PROCESS               │
│ (STEPS S11 TO S16)               │
└─────────────────────────────────┘
            │
            ▼
┌─────────────────────────────────┐
│ MEASUREMENT PROCESS              │
│ (STEPS S41 TO S43)               │
└─────────────────────────────────┘
            │                          S101
            ▼
┌─────────────────────────────────┐
│ CALCULATE DOWNSTREAM-SIDE PM     │
│ CONCENTRATION $D_R$              │
└─────────────────────────────────┘
            │                          S102
            ▼
┌─────────────────────────────────┐
│ CALCULATE UPSTREAM-SIDE PM       │
│ CONCENTRATION $D_F$              │
└─────────────────────────────────┘
            │                          S103
            ▼
┌─────────────────────────────────┐
│ CALCULATE PM COLLECTION RATE     │
│ $X (= (D_F - D_R)/D_F)$          │
└─────────────────────────────────┘
            │                          S104
            ▼
< PM COLLECTION RATE $X \geqq X_{TH}$ ? >──── NO
            │                                  │
           YES                                 │
            ▼◄──────────────┐                  ▼
┌──────────────────┐  S105  │          ┌──────────────────┐  S106
│ SET FAILURE      │        │          │ SET FAILURE      │
│ JUDGMENT FLAG    │        │          │ JUDGMENT FLAG    │
│ TO 0 (NORMAL)    │        │          │ TO 1 (FAILED)    │
└──────────────────┘        │          └──────────────────┘
            │               │                  │
            ▼◄──────────────┴──────────────────┘
        ( END )
```

FAILURE JUDGMENT PROCESS

# FIG. 30

TEMPERATURE

INHIBIT EXECUTION OF FAILURE
DETECTION PROCESSING

REGENERATION
PERIOD

PM ACCUMULATED
AMOUNT

PM
ACCUMULATED
AMOUNT

W_END_REGEN

T_PM

DPF TEMPERATURE

PM CONCENTRATION
DOWNSTREAM OF DPF

t1   t2   t3  t4                    t5

TIME

EP 2 407 773 A1

# FIG. 31

START

S111
FPMREGEN＝1？ — YES

NO

S112
TEMP_DPF＞T_PM？ — YES

NO

S113
CALCULATE WEIGHT_PM

S114
CNT_PM ← CNT_PM + WEIGHT_PM

S115
CNT_PM＜W_END_REGEN？ — YES

NO

S116
DPF FAILURE DETECTION PROCESSING

S117
CNT_PM ← 0

RETURN

## FIG. 32

# FIG. 33

```
                        START

                          │
                          ▼                              S121
        ┌──────────────────────────────────────┐
        │   INITIAL PROCESSING OF PM SENSOR     │
        └──────────────────────────────────────┘
                          │
          ( Q )──────────▶│                              S122
                          ▼
        ┌──────────────────────────────────────┐
        │   START TIMER FOR MONITORING (T_MON)  │
        └──────────────────────────────────────┘
                          │
                          ▼                              S123
        ┌──────────────────────────────────────┐
        │   RECORD PREVIOUS OPERATING STATE     │
        │   PARAMETERS (N_PRE, W_PRE, V_PRE)    │
        └──────────────────────────────────────┘
                          │
                          ▼                              S124
        ╱──────────────────────────────────────╲
       ╱  HAS IDLE OPERATING STATE CONTINUED FOR ╲── NO
       ╲  AT LEAST IDLE JUDGMENT TIME T_TH_IDLE ? ╱
        ╲──────────────────────────────────────╱
                          │ YES
                          ▼                              S125
        ╱──────────────────────────────────────╲
  NO ──╱         MONITORING TIME T_MON           ╲
       ╲      < MAXIMUM TIME T_MON_MAX ?         ╱
        ╲──────────────────────────────────────╱
                          │ YES
                          ▼                              S126
        ╱──────────────────────────────────────╲
       ╱   IS OPERATING STATE OF ENGINE STABLE ? ╲── NO
        ╲──────────────────────────────────────╱
                          │ YES
                          ▼                              S127
        ╱──────────────────────────────────────╲
  NO ──╱    TRANSIENT OPERATING STATE (V > V_TH) ? ╲
        ╲──────────────────────────────────────╱
                          │ YES
                          ▼
                        ( L )
```

$S121$ — INITIAL PROCESSING OF PM SENSOR

$S122$ — START TIMER FOR MONITORING ($T_{MON}$)

$S123$ — RECORD PREVIOUS OPERATING STATE PARAMETERS ($N_{PRE}$, $W_{PRE}$, $V_{PRE}$)

$S124$ — HAS IDLE OPERATING STATE CONTINUED FOR AT LEAST IDLE JUDGMENT TIME $T_{TH\_IDLE}$ ?

$S125$ — MONITORING TIME $T_{MON}$ < MAXIMUM TIME $T_{MON\_MAX}$ ?

$S126$ — IS OPERATING STATE OF ENGINE STABLE ?

$S127$ — TRANSIENT OPERATING STATE ($V > V_{TH}$) ?

OPERATING STATE MONITORING PROCESS

# FIG. 34

(L)

INITIATE APPLICATION OF PARTICULATE COLLECTION VOLTAGE — S131

START TIMER FOR ELECTROSTATIC PARTICULATE COLLECTION ($T_{COL}$) — S132

RECORD OPERATING STATE PARAMETERS DURING ELECTROSTATIC PARTICULATE COLLECTION ($N_{COL}$, $W_{COL}$, $V_{COL}$) — S133

MEASURE CAPACITANCE DURING PARTICULATE COLLECTION $C_{COL}$ — S134

ELECTROSTATIC PARTICULATE COLLECTION COMPLETE ($C_{COL} > C_{COL\_TH}$)? — S135 — YES / NO

ELECTROSTATIC PARTICULATE COLLECTION TIME $T_{COL} >$ MAXIMUM TIME $T_{COL\_MAX}$? — S136 — NO / YES

STOP APPLICATION OF PARTICULATE COLLECTION VOLTAGE — S137

DID VEHICLE STOP DURING ELECTROSTATIC PARTICULATE COLLECTION? — S138 — YES / NO

(O)  (M)  (N)

ELECTROSTATIC PARTICULATE COLLECTION PROCESS

## FIG. 35

( M )

**S141**
START TIMER FOR SPONTANEOUS ADHERENCE ($T_{AFTER}$)

**S142**
RECORD OPERATING STATE PARAMETERS FOR SPONTANEOUS ADHERENCE ($N_{MEAS}$, $W_{MEAS}$, $V_{MEAS}$)

**S143**
DID VEHICLE STOP DURING SPONTANEOUS ADHERENCE ? — YES

NO

**S144**
$T_{AFTER} \geqq T_{MEAS}$ ?

NO

YES

**S145**
MEASURE POST SPONTANEOUS ADHERENCE CAPACITANCE $C_{PM}$

**S146**
IS PM EMITTED AMOUNT AT LEAST PREDETERMINED AMOUNT ? — NO

YES

( P )

MEASUREMENT PROCESS

**S151**
CALCULATE RATE OF CHANGE IN CAPACITANCE $C'$

( N )

**S152**
RATE OF CHANGE IN CAPACITANCE $C'$ < FAILURE JUDGMENT VALUE $C'_{TH}$ ? — NO

YES

**S153**
SET FAILURE JUDGMENT FLAG TO 0 (NORMAL)

**S154**
SET FAILURE JUDGMENT FLAG TO 1 (FAILED)

FAILURE JUDGMENT PROCESS

END

# FIG. 36

P

O

S161

HAS VEHICLE ENTERED A STOPPED STATE ?

NO

YES

S162

MEASURE CAPACITANCE DURING REGENERATION $C_{REG}$

S163

NO

$C_{REG} > C_{REG\_TH}$ ?

YES

S164

REGENERATE SENSOR

SENSOR REGENERATION PROCESS

Q

## INTERNATIONAL SEARCH REPORT

| | International application No. |
|---|---|
| | PCT/JP2010/001724 |

**A. CLASSIFICATION OF SUBJECT MATTER**
*G01N27/22*(2006.01)i, *F01N3/00*(2006.01)i, *F01N3/18*(2006.01)i, *G01N15/08* (2006.01)i

According to International Patent Classification (IPC) or to both national classification and IPC

**B. FIELDS SEARCHED**

Minimum documentation searched (classification system followed by classification symbols)
G01N27/00-27/24, G01N15/00-15/14, F01N3/00, F01N3/18

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)
JSTPlus/JST7580(JDreamII)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2008-502892 A (Robert Bosch GmbH),<br>31 January 2008 (31.01.2008),<br>entire text; all drawings<br>& US 2009/0051376 A1    & EP 1759183 A<br>& WO 2005/124313 A1    & DE 102004028997 A<br>& CN 1969179 A | 4-9,11<br>12-20 |
| Y | JP 2006-515066 A (Robert Bosch GmbH),<br>18 May 2006 (18.05.2006),<br>entire text; all drawings<br>& US 2007/0119233 A1    & EP 1704400 A<br>& WO 2005/050174 A1    & DE 10353860 A | 12-13,20 |
| Y | JP 2002-285822 A (Isuzu Motors Ltd.),<br>03 October 2002 (03.10.2002),<br>entire text; all drawings<br>(Family: none) | 14-19 |

[X] Further documents are listed in the continuation of Box C.   [ ] See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 June, 2010 (07.06.10) | 15 June, 2010 (15.06.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/001724

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2007-262973 A  (NGK Insulators, Ltd.), 11 October 2007 (11.10.2007), entire text; all drawings (Family: none) | 19 |
| A | JP 2008-139294 A  (Honda Motor Co., Ltd.), 19 June 2008 (19.06.2008), entire text; all drawings & US 2008/0105567 A1    & EP 1921437 A2 & DE 602007002032 D | 1-20 |
| E,A | JP 2009-276151 A  (NGK Insulators, Ltd.), 26 November 2009 (26.11.2009), entire text; all drawings (Family: none) | 1-20 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007315275 A
- JP 2007132290 A
- JP 2006266961 A
- JP 2008139294 A